(19) Europäisches Patentamt
European Patent Office
Office européen des brevets

(11) **EP 4 495 656 A1**

(12) **EUROPEAN PATENT APPLICATION**
published in accordance with Art. 153(4) EPC

(43) Date of publication:
**22.01.2025 Bulletin 2025/04**

(21) Application number: **23771151.0**

(22) Date of filing: **20.03.2023**

(51) International Patent Classification (IPC):
*G02B 13/00* (2006.01)   *G02B 9/62* (2006.01)
*G03B 17/12* (2021.01)   *H04N 23/55* (2023.01)

(52) Cooperative Patent Classification (CPC):
**G02B 9/62; G02B 13/00; G03B 17/12; H04N 23/55**

(86) International application number:
**PCT/KR2023/003666**

(87) International publication number:
**WO 2023/177273 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.03.2022 KR 20220034118
17.05.2022 KR 20220060477**

(71) Applicant: **Samsung Electronics Co., Ltd
Suwon-si, Gyeonggi-do 16677 (KR)**

(72) Inventor: **KIM, Haneung
Suwon-si Gyeonggi-do 16677 (KR)**

(74) Representative: **HGF
HGF Limited
1 City Walk
Leeds LS11 9DX (GB)**

(54) **LENS ASSEMBLY AND ELECTRONIC DEVICE COMPRISING SAME**

(57)    According to various embodiments of the present disclosure, provided are a lens assembly and an electronic device comprising same, the lens assembly having a plurality of lenses aligned in an optical axis direction from a object side toward an image side, and the electronic device comprising: the lens assembly, which includes a first lens having positive refractive power, a second lens, a third lens, a fourth lens having negative refractive power and having a shape of being recessed toward the image side, a fifth lens, and a sixth lens having positive refractive power; and an image sensor including an imaging plane on which an image is formed, wherein the air gap between the fourth lens and the fifth lens is greater than the air gap between other adjacent lenses. Other various embodiments are possible.

FIG. 1

## Description

[Technical Field]

Various embodiments of the disclosure relate to a lens assembly and an electronic device including the same.

[Background Art]

Optical devices (e.g., a camera capable of capturing images or videos) have come to be widely used. Conventionally, film-type optical devices were mainly used. In recent years, digital cameras or video cameras having a solid-state image sensor such as a charge-coupled device (CCD) or a complementary metal-oxide semiconductor (CMOS) have been widely distributed. Optical devices that adopt a solid image sensor (CCD or CMOS) are gradually replacing film-type optical devices because images are easier to store, copy, and move compared to the film-type optical devices.

In order to obtain high quality images and/or videos, an optical device may include an optical system including a lens assembly configured with a plurality of lenses and an image sensor with a high pixel count. The lens assembly may make it possible to obtain high-quality (high-resolution) images and/or videos by having, for example, a low F-number and low aberration. In order to obtain a low f-number (Fno) and less aberration, in other words, in order to obtain a bright and high-resolution image, it is necessary to combine multiple lenses. As the number of pixels included in an image sensor includes, the pixel count of the image sensor becomes higher, and the image sensor with a higher pixel count may acquire high-definition (high-resolution) images and/or videos. In order to implement a high-pixel image sensor in a limited mounting space within an electronic device, a plurality of very small pixels, for example, micro-scale pixels, may be used. Recently, image sensors containing tens to hundreds of millions of micrometer-scale pixels have also been installed in portable electronic devices such as smartphones and tablet PCs.

These optical devices have recently become essential components of electronic devices that provide various services and additional functions, and high-performance optical devices may have the effect of enticing users to purchase electronic devices.

[Detailed Description of the Invention]

[Technical Problem]

Portable electronic devices are becoming smaller and thinner to make them easier to carry, and optical systems mounted on electronic devices are also required to have a compact lens structure with a short total length. In the case of a telephoto lens, the overall optical system length becomes longer in proportion to the focal length, and thus it may be difficult to accommodate the telephoto lens in a small electronic device. Recently, as bright telephoto lenses with high pixels have been adopted, the total lengths of camera modules have increased. Thus, a design is applied in which the portion where a camera module is installed protrudes outside a housing more than other portions of an electronic device body.

Various studies are being conducted to prevent the portion where a camera module is installed from protruding outside a housing more than other portions, that is, to slim down the camera module. For example, a telephoto lens may be configured with five lenses. However, when the telephoto lens is configured with five lenses, modulation transfer function (MTF) performance may deteriorate due to difficulties in correcting aberrations such as curvature. In addition, a telephoto lens may be configured with 6 lenses. However, configuring a telephoto lens with 6 lenses may be disadvantageous in terms of slimness due to the shapes of the lenses.

Various embodiments of the disclosure are to provide a lens assembly that is a high-pixel bright telephoto lens and can be miniaturized, and an electronic device including the same.

[Technical Solution]

Various embodiments of the disclosure may provide an electronic device including a plurality of lenses which are aligned along an optical axis direction from an object obj side to an image side and include a first lens having positive refractive power, a second lens, a third lens, a fourth lens having negative refractive power and a concave shape on the image side, a fifth lens, and a sixth lens having positive refractive power, and an image sensor including an imaging plane img on which an image is formed. The air gap between the fourth lens and the fifth lens is larger than the air gap between other neighboring lenses, and the electronic device satisfies Conditional Expression 1 and Conditional Expression 2 below.

[Conditional Expression 1]

$$TL/f < 1$$

[Conditional Expression 2]

$$0.1 < SL/TL < 0.8$$

(here, "TL" in Conditional Expression 1 is a distance from a object side surface of the first lens to the imaging plane, "f" is a composite focal length of the lenses included in the lens assembly, and "SL" in Conditional Expression 2 is a distance from an aperture to the imaging plane)

Various embodiments of the present disclosure may provide an electronic device including a lens assembly, in which a plurality of lenses are aligned along an optical axis direction from a object side to an image side and include a first lens having positive refractive power, a second lens, a third lens having a concave shape on an image side, a fourth lens having negative refractive power and a concave shape on the image side, a fifth lens having negative refractive power and a concave shape on a object side, and a sixth lens having positive refractive power, and an image sensor including an imaging plane on which an image is formed. The air gap between the fourth lens and the fifth lens is larger than the air gap between other two adjacent lenses, and the electronic device satisfies Conditional Expression 1 and Conditional Expression 3 below.

[Conditional Expression 1]

$$TL/f < 1$$

[Conditional Expression 2]

$$0.1 < SL/TL < 0.8$$

[Conditional Expression 3]

$$0.1 < T34/T45 < 1$$

(Here, "TL" in Conditional Expression 1 is a distance from the object side of the first lens to the imaging plane, "f" is a composite focal length of the lenses included in the lens assembly, "SL" in Conditional Expression 2 is a distance from the aperture to the imaging plane, "T34" in Conditional Expression 3 is an air gap between the third lens and the fourth lens, and "T45" is an air gap between the fourth lens and the fifth lens)

Various embodiments of the present disclosure may provide an electronic device including a lens assembly in which a plurality of lenses are aligned along an optical axis direction from an object side to an image side and include a first lens having positive refractive power and a convex shape on a object side, a second lens having a convex shape on the object side, a third lens having a concave shape on an image side, a fourth lens having negative refractive power and a concave shape on the image side, a fifth lens having negative refractive power and a concave shape on the object side, and a sixth lens having positive refractive power, and a convex shape on the image side, and an image sensor including an imaging plane on which an image is formed. The air gap between the fourth lens and the fifth lens is larger than the air gap between other two adjacent lenses.

[Advantageous Effects]

According to various embodiments of the disclosure, the shape of the lens assembly can be optimized even when the lens assembly is configured with 6 lenses, and by configuring the air gap between the fourth lens and the fifth lens to be larger than the air gap between other two adjacent lenses, the lens assembly can be easily installed even in miniaturized electronic devices.

According to various embodiments of the disclosure, the lens assembly enables appropriate aberration correction and makes it possible to obtain a high-quality image by adjusting the distance of the image plane depending on the distance between a subject and an electronic device.

[Brief Description of Drawings]

FIG. 1 is a view illustrating the configuration of an optical system including a lens assembly and an image sensor according to one of various embodiments.

FIG. 2 is a graph illustrating spherical aberration of the lens assembly illustrated in FIG. 1.

FIG. 3 is a graph illustrating astigmatism of the lens assembly illustrated in FIG. 1.

FIG. 4 is a graph illustrating distortion aberration of the lens assembly illustrated in FIG. 1.

FIG. 5 is a view illustrating the configuration of an optical system including a lens assembly and an image sensor according to another one of various embodiments.

FIG. 6 is a graph illustrating spherical aberration of the lens assembly illustrated in FIG. 5.

FIG. 7 is a graph illustrating astigmatism of the lens assembly illustrated in FIG. 5.

FIG. 8 is a graph illustrating distortion aberration of the lens assembly illustrated in FIG. 5.

FIG. 9 is a view illustrating the configuration of an optical system including a lens assembly and an image sensor according to another one of various embodiments.

FIG. 10 is a graph illustrating spherical aberration of the lens assembly illustrated in FIG. 9.

FIG. 11 is a graph illustrating astigmatism of the lens assembly illustrated in FIG. 9.

FIG. 12 is a graph illustrating distortion aberration of the lens assembly illustrated in FIG. 9.

FIG. 13 is a view illustrating the configuration of an optical system including a lens assembly and an image sensor according to another one of various embodiments.

FIG. 14 is a graph illustrating spherical aberration of the lens assembly illustrated in FIG. 13.

FIG. 15 is a graph illustrating astigmatism of the lens assembly illustrated in FIG. 13.

FIG. 16 is a graph illustrating distortion aberration of the lens assembly illustrated in FIG. 13.

FIG. 17 is a view illustrating the configuration of a lens assembly according to yet another one of various embodiments of the disclosure.

FIG. 18 is a graph illustrating spherical aberration of the lens assembly illustrated in FIG. 17.

FIG. 19 is a graph illustrating astigmatism of the lens assembly illustrated in FIG. 17.

FIG. 20 is a graph illustrating distortion aberration of the lens assembly illustrated in FIG. 17.

FIG. 21 is a view illustrating the configuration of an optical system including a first optical member, a second optical member, a lens assembly, and an image sensor, according to various embodiments.

FIG. 22 is a block diagram of an electronic device in a network environment, according to various embodiments.

FIG. 23 is a block diagram exemplifying a camera module according to various embodiments.

[Mode for Carrying out the Invention]

Hereinafter, various embodiments of the disclosure will be described with reference to the accompanying drawings. It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular expression may include a plural expression unless they are definitely different in a context. As used in various embodiments of the disclosure, such expressions as "A or B" or "at least one of A and/or B" may include all possible combinations of items enumerated together. Such expressions as "a first", "a second", "the first", and "the second" may modify corresponding elements regardless of the order or the importance thereof. Theses expressions are merely used to distinguish a corresponding element from another, and do not limit the elements. When an element (e.g., a first element) is referred to as being (operatively or communicatively) "connected" or "coupled" to/with another element (e.g., a second element), the element may be connected or coupled to/with the other element directly or via another element (e.g., a third element).

As used in various embodiments of the disclosure, the expression "configured to" may be interchangeably used with, for example, "suitable for", "having the capability to", "adapted to", "made to", "capable of", or "designed to" in hardware or software according to situations. In some situations, the expression "device configured to" may mean that the device, together with other devices or components, "is able to". For example, the phrase "processor adapted (or configured) to perform A, B, and C" may mean a dedicated processor (e.g., an embedded processor) only for performing the corresponding operations or a general-purpose processor (e.g., CPU or application processor) that can perform the corresponding operations by executing one or more software programs stored in a memory device.

An electronic device according to various embodiments of the disclosure may include at least one of, for example, a smartphone, a tablet personal computer (PC), a mobile phone, a video phone, an electronic book reader, a desktop PC, a laptop PC, a netbook computer, a workstation, a server, a personal digital assistant (PDA), a portable multimedia player (PMP), a MP3 player, a medical device, a camera, and a wearable device. The wearable device may include at least one of an accessory type (e.g., watch, ring, bracelet, anklet, necklace, glasses, contact lens, or head-mounted device (HMD)), a fabric or clothing-integrated type (e.g., electronic clothing), a body-mounted type (e.g., skin pad, or tattoo), and a bio-implantable type (e.g., implantable circuit). In some embodiments, the electronic device may include at least one of, for example, a television, a digital video disk (DVD) player, an audio, a refrigerator, an air conditioner, a vacuum cleaner, an oven, a microwave oven, a washing machine, an air purifier, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

In other embodiments, the electronic device may include at least one of various medical devices (e.g., various portable medical measuring devices(blood glucose monitoring device, heart rate monitoring device, blood pressure measuring device, body temperature measuring device, etc.), magnetic resonance angiography (MRA), magnetic resonance imaging (MRI), computed tomography (CT) machine, ultrasonic machine, etc.), a navigation device, a global positioning system (GPS) receiver, an event data recorder (EDR), a flight data recorder (FDR), a vehicle infotainment device, electronic equipment for a ship (e.g., ship navigation device, gyro-compass, etc.), avionics, a security device, an automobile head unit, a home or industrial robot, an automatic teller's machine (ATM) in banks, point of sales (POS) in a shop, or Internet of things devices (e.g., light bulb, various sensors, electric or gas meter, sprinkler device, fire alarm, thermostat, streetlamp, toaster, sporting goods, hot water tank, heater, boiler, etc.). According to some embodiments, the electronic device may include at least one of a part of furniture or a building/structure, an electronic board, an electronic signature receiving device, a projector, and various kinds of measuring instruments (e.g., water meter, electric meter, gas meter, radio wave meter, etc.). In various embodiments, the electronic device may be flexible, or may be a combination of one or more of the aforementioned various devices. The electronic device according to various embodiments of the disclosure is not limited to the aforementioned devices. In various embodiments of the disclosure, the term "user" may refer to a person using an electronic device or a device (e.g., artificial intelligence electronic device) using an electronic device. The electronic device according to embodiments of the disclosure is not limited to those described above.

In describing various embodiments of the disclosure, some numerical values may be presented, but it should be noted that these numerical values do not limit various embodiments of the disclosure unless set forth in the claims.

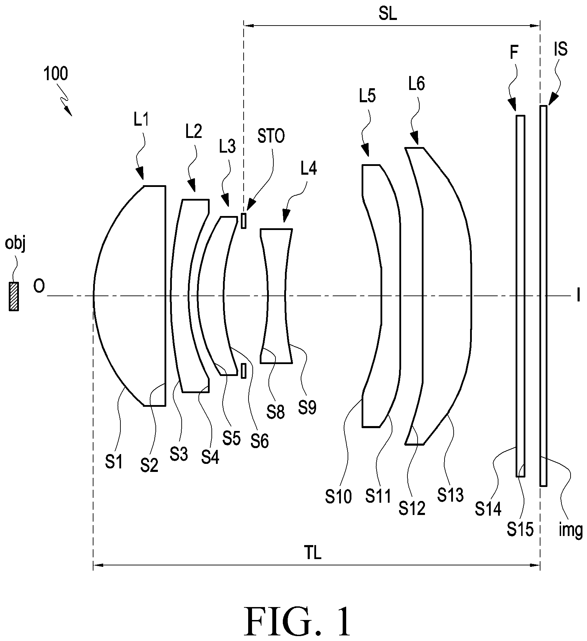

FIG. 1 is a view illustrating the configuration of an optical system including a lens assembly and an image sensor according to one of various embodiments of the disclosure.

The lens assembly 100 according to various embodiments of the disclosure may include at least six lenses. Referring to FIG. 1, for example, the lens assembly 100 according to one of various embodiments of the disclosure may include a lens assembly 100 configured with six lenses. According to various embodiments, an electronic device may be equipped with an image sensor IS. The lens assembly 100 including a plurality of lenses (e.g., L1, L2, L3, L4, L5, and L6) may constitute an optical system by being mounted on the optical device and/or the electronic device equipped with the image sensor IS. The optical device may be, for example, a camera, and the following description may be made assuming that the optical device is equipped with the lens assembly 100. In addition, the term, optical device, may be understood as a concept that further includes a housing that protects internal components and defines an exterior appearance, in addition to the optical system.

According to various embodiments, the image sensor IS is a sensor mounted on a circuit board (not illustrated) and arranged in the state of being aligned with an optical axis O-I, and may be configured to respond to light. The image sensor IS may include, for example, a sensor such as a complementary metal-oxide semiconductor (CMOS) or a charge-coupled device (CCD). Without being limited to these, the image sensor IS may include various elements configured to convert, for example, a subject image, into an electric image signal. The image sensor IS may be configured to detect contrast information, gradation ratio information, color information, or the like on a subject from light passing through a plurality of lenses L1, L2, L3, L4, L5, and L6 so as to acquire an image of the subject.

According to various embodiments, the lens assembly 100 may be arranged on the optical axis O-I passing through the centers of the plurality of lenses (e.g., L1, L2, L3, L4, L5, and L6 L4, L5, and L6) from a subject (or external object) side O. In the following description of the configuration of each lens, for example, the object side may indicate the orientation where a subject obj is located, and the image side may indicate the orientation where an imaging plane img on which an image is formed is located. In addition, in a lens, the "surface facing a object side" may refer to, for example, the surface on the side where the subject is located with reference to the optical axis O-I, i.e., the left surface (or the front surface) of the lens in the drawings of the disclosure, and the "surface facing an image side" may refer to the surface on the side where the imaging img is located with reference to the optical axis O-I, i.e., the right surface (or the rear surface) of the lens on the drawings. Here, the imaging plane (img) may be, for example, a portion where an imaging device or an image sensor IS is placed and an image is formed. According to various embodiments, with reference to at least one of the plurality of lenses included in the lens assembly 100, viewing the object side O along the optical axis O-I may be defined as "being oriented in a first direction", and viewing the image side I along the optical axis O-I may be defined as "being oriented in a second direction". According to various embodiments, when a lens (e.g., the first lens) includes a surface facing the object side O, it may be said that the surface facing the object side O is oriented in the first direction. In addition, when a lens (e.g., the first lens L1) includes a surface facing the image side I, it may be said that the surface facing the image side I is oriented in a second direction. In addition, when a surface of each of the lenses is oriented in the first direction or the second direction in the state in which the centers of the plurality of lenses and/or the image sensor IS are located on the optical axis O-I, it may be defined that the optical system including the plurality of lenses and/or the image sensor IS are aligned along the optical axis.

In the description of the plurality of lenses (e.g., L1, L2, L3, L4, L5, and L6) according to various embodiments, the portion of each lens that is close to the optical axis O-I (the paraxial portion) may be referred to as a "chief portion", and a portion far from the optical axis O-I (or the portion near the edge of the lens (a portion far from the axis)) may be referred to as a "marginal portion". For example, the chief portion may be a portion that intersects the optical axis O-I in a lens (e.g., the first lens L1). The marginal portion may be, for example, a portion spaced apart from the optical axis O-I by a predetermined distance in a lens (e.g., the first lens L1). The marginal portion may include, for example, an end portion of the lens furthest from the optical axis O-I of the lens.

According to various embodiments, the radius of curvature, the thickness, the optical total length from image plane (OTTL) (which may be referred to as a "total length (TL)", the focal length, and the like of the plurality of the lenses (e.g., L1, L2, L3, L4, L5, and L6) of the disclosure may all be in mm units unless otherwise specified. In addition, the thicknesses of lenses, the gap between lenses, air gaps, and the overall optical length (OTTL) (or TL) may be distances measured with reference to the optical axis of the lenses. In the description of the shape of a lens, the convex shape of one surface may mean that the optical axis portion of the surface is convex, and the concave shape of one surface may mean that the optical axis portion of the surface is concave. Therefore, even when one surface of a lens (the optical axis portion of the surface) is described as having a convex shape, the edge portion of the lens (the portion spaced a predetermined distance from the optical axis portion of the surface) may be concave. Likewise, even when one surface of a lens (the optical axis portion of the surface) is described as having a concave shape, the edge portion of the lens (the portion spaced a predetermined distance from the optical axis portion of the surface) may be convex. In addition, the term, "inflection point", used in the following detailed description and claims may mean a point at which a curvature radius is changed in a portion that does not intersect with the optical axis.

The lens assembly 100 according to various embodiments of the disclosure may be advantageous in correcting aberrations, including chromatic aberration, by including a plurality of lenses (e.g., L1, L2, L3, L4, L5, and L6). Referring to FIG. 1, the lens assembly 100 according to various embodiments may include six lenses as the plurality lenses (e.g., L1, L2, L3, L4, L5, and L6) sequentially aligned, for example, in the direction of optical axis O-I (e.g., the direction oriented from a subject O toward the image I in FIG. 1). Sequentially from the object side O, the six lenses may be referred to as a first lens L1, a second lens L2, a third lens L3, a fourth lens L4, a fifth lens L5, and a sixth lens L6, respectively. The plurality of lenses (e.g., L1, L2, L3, L4, L5, and L6) may be arranged to be aligned with an image sensor IS on the optical axis O-I.

According to various embodiments, to configure a telephoto lens, the first lens L1 included in the lens assembly 100 may have positive refractive power, the fourth lens L4 may have negative refractive power, and the sixth lens L6 may have positive refractive power. According to an embodiment, the fifth lens L5 may have negative refractive power. In addition, the second lens L2 and the third lens L3 may have positive or negative refractive power. In the above-described embodiments, when beams parallel to the optical axis O-I incident on a lens having positive refractive power, the beams passing through the lens may be condensed. For example, a lens having positive refractive power may be a lens based on the principle of a convex lens. On the contrary, when parallel beams are incident on a lens having negative refractive power, the beams passing through the lens may be dispersed. For example, a lens having negative refractive power may be a lens based on the principle of a concave lens.

In the embodiment of FIG. 1, the first lens L1, which has an effective diameter larger than those of the second lens L2 and the third lens L3 while having positive refractive power, may condense a greater amount of light. Here, the term "effective diameter" may mean the distance between one end and the other end of a lens in a direction perpendicular to the optical axis O-I. The first lens L1, which has an effective diameter that is larger than those of other lenses (e.g., the second lens L2 and the third lens L3 while having positive refractive power, may condense a large amount of light. The fourth lens L4, which has a concave shape in the surface S9 facing the image side while having negative refractive power, may make the lens assembly slim. The sixth lens L6, which has positive refractory power, may also be configured such that the surface S13 facing the image side O is convex to easily secure the amount of light in the marginal portion by lowering the angle of incidence of light incident on the imaging plane img.

According to various embodiments of the disclosure, as a lens assembly for implementing a telephoto lens, for example, a lens assembly configured with, for example, at least six lenses (e.g., the first lens L1, the second lens L2, the third lens L3, the fourth lens L4, the fifth lens L5, and the sixth lens L6 as illustrated in FIG. 1) may be provided, in which the distance between the fourth lens L4, which is located fourth from the object side O, and the fifth lens L5 may be made larger than the distances (e.g., air gaps) between other two adjacent lenses. For example, the distance between the fourth lens L4 and the fifth lens L5 may be greater than the distance between the first lens L1 and the second lens L2, may be greater than the distance between the second lens L2 and the third lens L3, and may be greater than the distance between the third lens L3 and the fourth lens L4. In addition, the distance between the fourth lens L4 and the fifth lens L5 may be greater than the distance between the fifth lens L5 and the sixth lens L6. According to an embodiment, the distance between the fourth lens L4 and the fifth lens L5 is made greater than the distances between other two adjacent lenses so that the distance between the first lens L1 and the fourth lens L4 can be made relatively small. As a result, the lens assembly can be made slim and light. In addition, there is an advantage in that the lens assembly can be miniaturized by fabricating the image side surface S9 of the fourth lens L4 to be concave.

According to various embodiments of the disclosure, the plurality of lenses (e.g., L1, L2, L3, L4, L5, and L6) included in the lens assembly 100 may include lenses made of glass and/or synthetic resin (e.g., plastic). In addition, through a combination of the plurality of lenses, the lens assembly 100 may have an angle of view of about 25 degrees or less. Accordingly, in various embodiments of the disclosure, a telephoto lens can be implemented by using the lens assembly 100 having an angle of view of 25 degrees or less. The image sensor IS may have the optical axis O-I as its normal line and may have a substantially rectangular (e.g., square) shape with a small thickness. In addition, the image sensor IS has an image height (ImagH) of about several mm (e.g., 2.25 mm) in size and may be configured to enable the arrangement of hundreds of thousands to tens of millions to hundreds of millions of pixels. For reference, the image of height (ImagH) here may mean half the diagonal length of the image sensor.

Except for the above descriptions of the first lens L1, the second lens L2, the third lens L3, the fourth lens L4, the fifth lens L5, and the sixth lens L6, other parameters may be configured in various ways for each embodiment. According to an embodiment, as illustrated in FIG. 1, the first lens L1 may serve to condense light by being configured such that the first lens L1 has positive refractive power and the surface S1 facing the object side O is convex. The surface S3 of the second lens L2 facing the subject O may also have a convex lens shape. The surface S6 of the third lens L3 facing the image side I may have a concave shape. The fourth lens L4 is a lens through which the condensed light is diverged while sequentially passing through the first lens L1, the second lens L2, and the third lens L3 having the above-described shapes. Since the surface S9 of the fourth lens L4 facing the image side has a concave shape, the refraction angle of light can be increased and the optical path can be reduced. The fifth lens L5 may be configured such that the surface S10 facing the object side O is concave and the surface S11 facing the image side I is concave. The sixth lens L6 may be configured such that the surface S12 facing the object side O is concave and the surface S13 facing the image side I is convex. However, it is to be noted that the foregoing only describes one embodiment for the first lens L1, the second lens L2, the third lens L3, the fourth lens L4, the fifth lens L5, and the sixth lens L6, and other embodiments are also possible.

According to various embodiments, in the plurality of lenses (e.g., L1, L2, L3, L4, L5, L6) of the lens assembly 100, as the spacing between one lens and another adjacent lens becomes smaller, the overall optical length (OTTL) (or TL) of the lens assembly 100 may become shorter. For example, when it is desired to make an optical device and/or an electronic device including the lens assembly 100 in a small size according to various embodiments of the disclosure, it is advantageous to keep the overall optical length (OTTL) as short as possible. However, there may be physical limitations in shortening the overall length of the lens assembly 100 in the state in which a proper telephoto ratio is ensured. According to various embodiments of the disclosure, the spacing of the plurality of lenses (e.g., L1, L2, L3, L4, L5, and L6) may variously designed depending on optical characteristics (e.g., aberration characteristics, wide angle characteristics, and/or brightness characteristics) required for the lens assembly 100.

According to various embodiments, the lens assembly 100 may further include a filter F disposed between the sixth lens L6 and the image sensor IS. The filter F may block light (e.g., infrared rays) detected by a film or an image sensor of an optical device. The filter F may include at least one of, for example, a low pass filter or a cover glass. For example, when the filter F is mounted, the color sense of an image detected and photographed through the image sensor IS may be made to be similar to the color sense felt by a person when viewing an actual object. In addition, the filter F may prevent infrared rays from being transferred to the imaging plane img of the image sensor by allowing visible light to pass therethrough and allowing infrared rays to be emitted to the outside.

By satisfying the following Conditional Expression 1 and/or Conditional Expression 2, the above-described lens assembly 100 may be miniaturized and have high-performance optical characteristics.

An electronic device that satisfies [Conditional Expression 1] and [Conditional Expression 2] below.

[Conditional Expression 1]

$$TL/f < 1$$

[Conditional Expression 2]

$$0.1 < SL/TL < 0.8$$

Here, "TL" in Conditional Expression 1 may be the distance from the object side surface of the first lens to the imaging plane img of the image sensor IS, "f" may be the composite focal length of the lenses included in the lens assembly, "SL" in Conditional Expression 2 may be the distance from the aperture STO to the imaging plane img of the image sensor IS. Conditional Expression 1 may define that the lens assembly corresponds to a telephoto lens. Conditional Expression 2 may define the position of the aperture. Referring to Condition Equation 2, when the position of the aperture is located too far from the imaging plane img and exceeds the upper limit, the amount of light in the marginal portion may be too large and the amount of light in the chief portion may be reduced, causing a low-quality image to be output.

In addition, the above-described lens assembly 100 may additionally satisfy the following Conditional Expression 3.

[Conditional Expression 3]

$$0.1 < T34/T45 < 1$$

Here, "T34" in Conditional Expression 3 may be an air gap between the third lens and the fourth lens, and "T45" may be an air gap between the fourth lens and the fifth lens. The lens assembly of the disclosure may implement a high-pixel telephoto lens in the state in which the distance between the fourth lens L4 and the fifth lens L5 is larger than the spacing between the other two adjacent lenses.

In addition, the above-described lens assembly 100 may additionally satisfy the following Conditional Expression 4.

[Conditional Expression 4]

$$0.1 < \frac{T12 + T23}{T34 + T45} < 1$$

Here, "T12" in Conditional Expression 4 may be an air gap between the first lens and the second lens, "T23" may be an air gap between the second lens and the third lens, "T34" in Conditional Expression 4 may be an air gap between the third lens and the fourth lens, and "T45" may be an air gap between the fourth lens and the fifth lens. In the case of Conditional Expression 4 as the characteristic of the optical system becomes closer to 1, it may be more disadvantageous for aberration correction. When the characteristic of the optical system exceed the upper limit of Conditional Expression 4 above, aberration correction may become difficult.

Various lens data of the lens assembly 100 are listed in Table 1 below, in which "S1 to S13" may refer to the surfaces of a plurality of related lenses (e.g., L1, L2, L3, L4, L5, and L6) on the object side O and the image side I. S7 may refer to the position of the aperture STO of the lens assembly 100. In addition, "S14" and "S15" may refer to the surfaces of an IR cut filter F on the object side O and the image side I. In addition, "obj" may refer to a subject. "radius" may be the radius of curvature of each lens, "thickness" may be the thickness or air gap of each lens, "H-ape" may be the radius of each lens, "efl" may refer to the focal length of each lens, "nd" be the refractive index of a medium (e.g., a lens), and "vd" may be an Abbe's number of each lens. When the lens assembly 100 included in Table 1 below may satisfy the above-mentioned conditions (and/or at least one of the above-mentioned conditions) when the lens assembly has a F-number (Fno) of approximately 2.47, a composite focal length (efl) of about 7.03 mm, and an overall optical length (OTTL) of 5.880 mm, and the image sensor IS of 2.40 has an image height (ImgH) of 2.40.

Table 1]

| surface | radius | thickness | H-ape | efl | nd | $V_d$ |
|---------|--------|-----------|-------|--------|-------|--------|
| obj | infinity | infinity | | | | |
| S1 | 1.700 | 0.928 | 1.420 | 3.04 | 1.535 | 55.740 |
| S2 | -32.772 | 0.100 | 1.341 | | | |
| S3 | 8.704 | 0.240 | 1.237 | -6.18 | 1.650 | 21.520 |
| S4 | 2.739 | 0.112 | 1.076 | | | |
| S5 | 2.193 | 0.337 | 1.028 | 117.11 | 1.535 | 55.740 |
| S6 | 2.150 | 0.268 | 0.927 | | | |
| S7(STO) | infinity | 0.318 | 0.865 | | | |
| S8 | -34.112 | 0.220 | 0.788 | -6.58 | 1.614 | 25.950 |
| S9 | 4.641 | 1.275 | 0.871 | | | |
| S10 | -4.018 | 0.211 | 1.600 | -6.14 | 1.535 | 55.740 |
| S11 | 18.719 | 0.312 | 1.713 | | | |
| S12 | 18.612 | 0.650 | 1.846 | 9.46 | 1.680 | 18.410 |
| S13 | -9.871 | 0.600 | 1.936 | | | |

(continued)

| surface | radius | thickness | H-ape | efl | nd | $V_d$ |
|---|---|---|---|---|---|---|
| S14 | infinity | 0.110 | 2.322 | | 1.517 | 64.170 |
| S15 | infinity | 0.213 | 2.344 | | | |
| img | infinity | -0.013 | 2.406 | | | |

In Table 2 and Table 3 below, the aspheric coefficients of a plurality of lenses (e.g., L1, L2, L3, L4, L5, and L6) are listed, and the aspherical coefficients are calculated by using the following Conditional Expression 5.

[Conditional Expression 5]

$$x = \frac{c\,y^2}{1+\sqrt{1-(K+1)\,c^2\,y^2}} + A\,y^4 + B\,y^6 + C\,y^8 + D\,y^{10} + \cdots$$

Here, "x" may be the distance (sag) from the vertex of a lens in the optical axis (OI) direction, "c" may be the reciprocal of the basic radius of curvature of a lens, "y" may be the distance in the direction perpendicular to the optical axis, "K" may be a Conic constant, and "A", "B", "C", "D", "E", "F", "G", "H", "J", "K(22th)", "L", "M", "N", and "O" may be aspherical coefficients, respectively.

[Table 2]

| | S1 | S2 | S3 | S4 | S5 | S6 |
|---|---|---|---|---|---|---|
| K | -8.611E-01 | 0.000E+00 | 0.000E+00 | -1.659E+00 | 0.000E+00 | 0.000E+00 |
| A(4th) | 1.760E-02 | 2.013E-02 | -1.750E-02 | -3.013E-02 | -8.599E-02 | -1.499E-01 |
| B(6th) | -1.431E-02 | 7.291E-02 | 1.921E-01 | -1.174E-02 | 2.421E-02 | 1.650E-01 |
| C(8th) | 6.580E-02 | -2.236E-01 | -4.733E-01 | 9.600E-01 | 9.784E-01 | -1.104E-02 |
| D(10th) | -1.351E-01 | 3.601E-01 | 6.331E-01 | -4.064E+00 | -3.716E+00 | -1.238E+00 |
| E(12th) | 1.642E-01 | -3.586E-01 | -4.382E-01 | 8.719E+00 | 7.346E+00 | 6.044E+00 |
| F(14th) | -1.219E-01 | 2.335E-01 | 1.233E-01 | -1.066E+01 | -8.006E+00 | -1.453E+01 |
| G(16th) | 5.410E-02 | -9.813E-02 | 1.799E-02 | 7.518E+00 | 4.554E+00 | 2.049E+01 |
| H(18th) | -1.309E-02 | 2.386E-02 | -1.846E-02 | -2.849E+00 | -1.053E+00 | -1.743E+01 |
| J(20th) | 1.296E-03 | -2.518E-03 | 3.047E-03 | 4.523E-01 | 0.000E+00 | 8.433E+00 |
| K(22nd) | 0.000E+00 | 0.000E+00 | 0.000E+00 | 0.000E+00 | 0.000E+00 | -1.828E+00 |
| L(24th) | 0.000E+00 | 0.000E+00 | 0.000E+00 | 0.000E+00 | 0.000E+00 | 0.000E+00 |
| M(26th) | 0.000E+00 | 0.000E+00 | 0.000E+00 | 0.000E+00 | 0.000E+00 | 0.000E+00 |
| N(28th) | 0.000E+00 | 0.000E+00 | 0.000E+00 | 0.000E+00 | 0.000E+00 | 0.000E+00 |
| O(30th) | 0.000E+00 | 0.000E+00 | 0.000E+00 | 0.000E+00 | 0.000E+00 | 0.000E+00 |

Table 3]

| | S8 | S9 | S10 | S11 | S12 | S13 |
|---|---|---|---|---|---|---|
| K | 0.000E+00 | 0.000E+00 | 0.000E+00 | 4.800E+01 | 9.000E+01 | 1.616E+01 |
| A(4th) | -2.746E-01 | -2.737E-01 | -1.808E-02 | -2.804E-02 | -1.125E-01 | -1.598E-01 |
| B(6th) | 7.005E-02 | 1.674E+00 | -4.024E-02 | 3.467E-02 | 2.694E-01 | 2.577E-01 |
| C(8th) | 3.038E-01 | -8.946E+00 | 3.221E-02 | -1.554E-01 | -3.711E-01 | -2.861E-01 |

(continued)

| | S8 | S9 | S10 | S11 | S12 | S13 |
|---|---|---|---|---|---|---|
| D(10th) | -4.415E-01 | 3.315E+01 | 1.621E-02 | 2.100E-01 | 3.029E-01 | 2.155E-01 |
| E(12th) | 7.961E-02 | -7.673E+01 | -1.931E-02 | -1.431E-01 | -1.572E-01 | -1.116E-01 |
| F(14th) | 0.000E+00 | 1.114E+02 | 5.979E-03 | 4.350E-02 | 5.142E-02 | 3.859E-02 |
| G(16th) | 0.000E+00 | -9.875E+01 | -6.362E-04 | 5.944E-03 | -1.016E-02 | -8.254E-03 |
| H(18th) | 0.000E+00 | 4.883E+01 | 0.000E+00 | -9.894E-03 | 1.106E-03 | 8.383E-04 |
| J(20th) | 0.000E+00 | -1.029E+01 | 0.000E+00 | 3.501E-03 | -5.090E-05 | 3.265E-05 |
| K(22nd) | 0.000E+00 | 0.000E+00 | 0.000E+00 | -5.683E-04 | 0.000E+00 | -1.640E-05 |
| L(24th) | 0.000E+00 | 0.000E+00 | 0.000E+00 | 3.653E-05 | 0.000E+00 | 1.126E-06 |
| M(26th) | 0.000E+00 | 0.000E+00 | 0.000E+00 | 0.000E+00 | 0.000E+00 | 0.000E+00 |
| N(28th) | 0.000E+00 | 0.000E+00 | 0.000E+00 | 0.000E+00 | 0.000E+00 | 0.000E+00 |
| O(30th) | 0.000E+00 | 0.000E+00 | 0.000E+00 | 0.000E+00 | 0.000E+00 | 0.000E+00 |

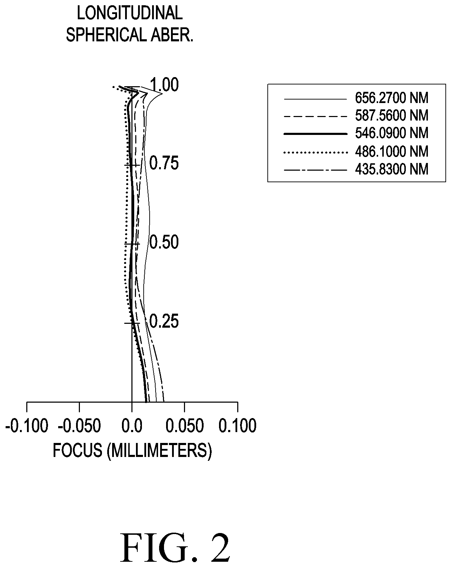

FIG. 2 is a graph showing spherical aberration of the lens assembly 100 according to one of various embodiments of the disclosure (e.g., the embodiment of FIG. 1). The spherical aberration may be a phenomenon in which the focusing positions of the beams passing through different portions of the lens (e.g., the chief portion and the marginal portion) become different from each other. In FIG. 2, the horizontal axis represents the degree of longitudinal spherical aberration, and the vertical axis represents the normalized distance from the center of the optical axis, in which a change in longitudinal spherical aberration depending on the wavelength of light may be represented. For example, longitudinal spherical aberration may be illustrated for light beams having wavelengths of about 656.3000 nanometers (nm), about 587.6000 nm, about 546.1000 nm, about 486.1000 nm, and about 435.8000 nm, respectively. Referring to FIG. 2, it can be seen that the longitudinal spherical aberration of the lens assembly according to various embodiments of the disclosure in the visible light band is limited to the range within about +0.025 to -0.025, showing stable optical characteristics.

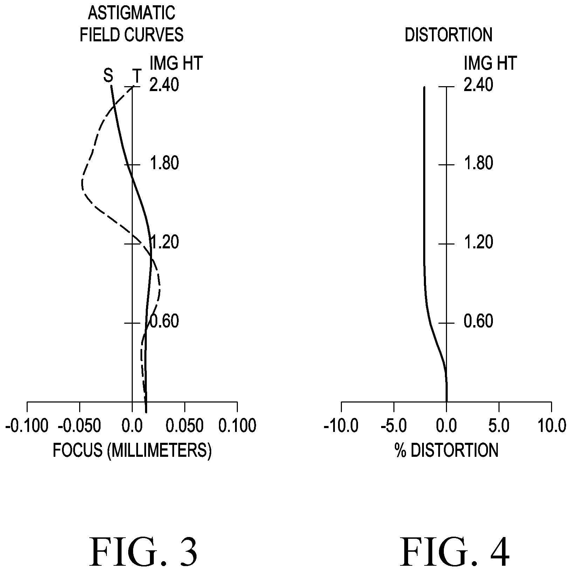

FIG. 3 is a graph showing astigmatism of the lens assembly 100 according to one of various embodiments of the disclosure (e.g., the embodiment of FIG. 1). The astigmatism may be a phenomenon in which, when the tangential plane or the meridian plane and the sagittal plane of a lens have different radii, the focal points of beams passing in the vertical line and the horizontal line may be shifted from each other.

In FIG. 3, the astigmatism of the lens assembly 100 is a result obtained at a wavelength of 546.1000 nm, in which the dotted line T represents astigmatism in a tangential direction (e.g., meridional plane curvature), and the solid line S represents astigmatism in a sagittal direction (e.g., spherical plane curvature). As can be seen from FIG. 3, according to various embodiments of the disclosure, astigmatism is limited to a range within about +0.055 to -0.055, showing stable optical characteristics.

FIG. 4 is a graph showing distortion aberration of a lens assembly 100 according to an embodiment (e.g., the embodiment of FIG. 1) among various embodiments of the disclosure. The distortion aberration occurs because the optical magnification varies depending on the distance from the optical axis O-I, in which compared to an image formed on a theoretical imaging plane, an image formed on the actual imaging plane (e.g., the imaging plane img in FIG. 1) may appear larger or smaller.

In FIG. 4, the distortion of the lens assembly 100 is a result obtained at a wavelength of about 546.1000 nm, and an image captured through the lens assembly 100 may be somewhat distorted at a point away from the optical axis O-I (e.g., marginal portion). However, this distortion is at a level that may generally occur in optical devices using lenses, and a lens assembly 100 according to an embodiment(e.g., the embodiment of FIG. 1) among the various embodiments of the disclosure has a distortion rate of about 2.5% and may provide good optical characteristics.

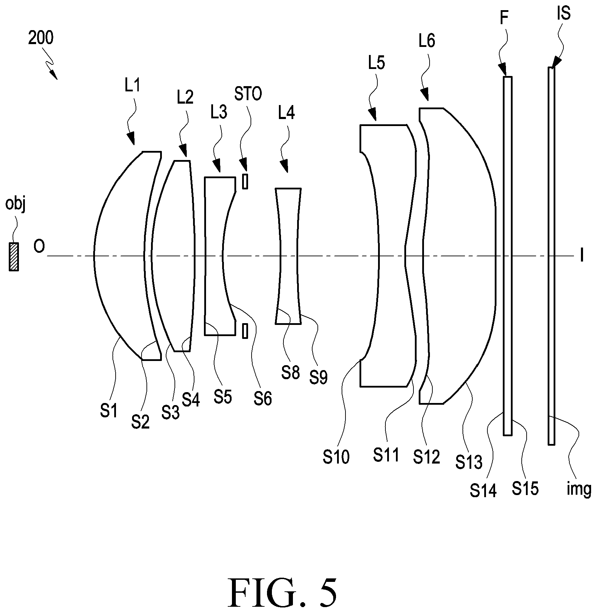

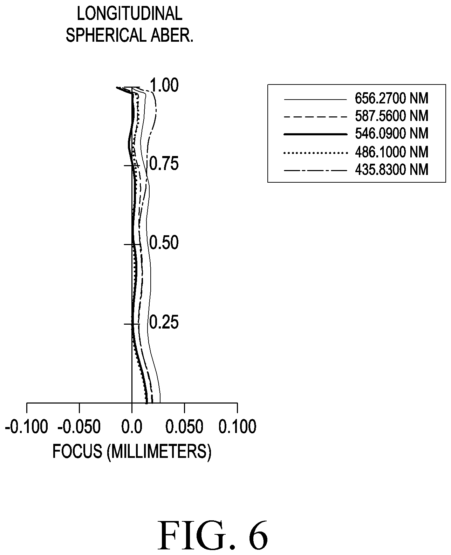

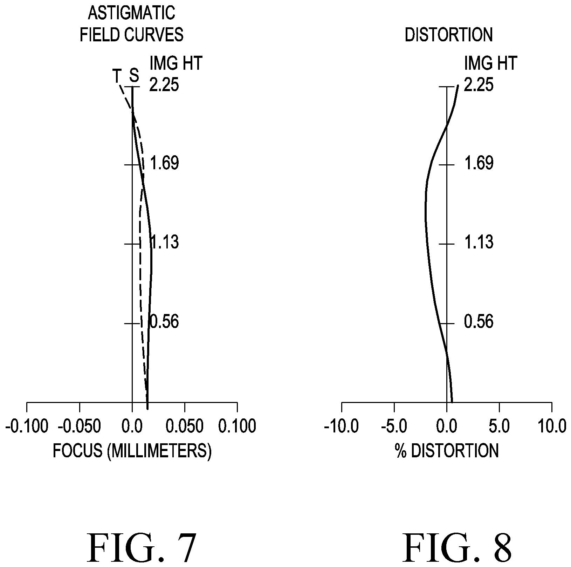

FIG. 5 is a view illustrating the configuration of a lens assembly 200 according to another one of various embodiments. FIG. 6 is a graph illustrating spherical aberration of the lens assembly 200 illustrated in FIG. 5. FIG. 7 is a graph illustrating astigmatism of the lens assembly 200 illustrated in FIG. 5. FIG. 8 is a graph illustrating distortion aberration of the lens assembly 200 illustrated in FIG. 5.

The description of the lens assembly 100 according to the above-described embodiments is applicable to the lens assemblies 200, 300, 400, 500, and 600 according to various other embodiments described later. Some of the plurality of lens assemblies 100, 200, 300, 400, 500, and 600 may have the same lens properties (e.g., angle of view, focal length, autofocus, F-number 9 (Fno), or optical zoom), or at least one lens assembly may have one or more lens properties that are different from those of other lens assemblies.

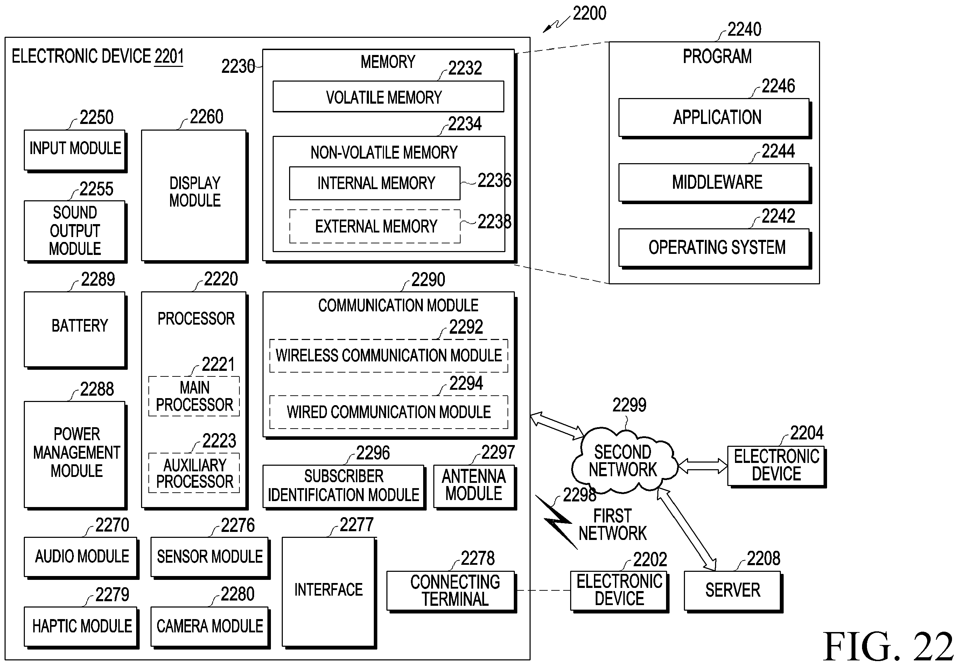

The plurality of lens assemblies 100, 200, 300, 400, 500, and 600 include a flash (the flash 2220 in FIG. 22 which will be described later), an image sensor IS, an image stabilizer (the image stabilizer 2240 in FIG. 22 which will be described later), memory (the memory 2250 in FIG. 22 which will be described later), or an image signal processor (the image signal processor 2260 in FIG. 22 which will be described later) to configure an optical device (e.g., a camera module).

In describing various embodiments of the disclosure below, for the components that can be easily understood through the above-described embodiments, reference numerals may be similarly assigned or omitted. In addition, redundant detailed descriptions thereof may be omitted.

Referring to FIGS. 5 to 8 together, among various embodiments of the disclosure, a lens assembly 200 according to an embodiment different from the embodiment of FIG. 1 may include a plurality of lenses (e.g., L1, L2, L3, L4, L5, and L6), an image sensor IS, and/or a filter F.

In Table 4 various lens data of the lens assembly 200 according to the embodiment of FIG. 5 may be listed. In each of Tables 5 and 6 below, the aspherical coefficients of the plurality of lenses L1, L2, L3, L4, L5, and L6, may be listed. Here, the lens assembly 200, which has a F-number (Fno) of about 2.4, a focal length of about 6.96 mm, an overall optical length (OTTL) of about 6.096 mm, and an image height of 2.25 mm, may satisfy the conditions described above (and/or at least one of the above-mentioned conditions).

Table 4]

| surface | radius | thickness | H-ape | efl | nd | $V_d$ |
|---|---|---|---|---|---|---|
| obj | infinity | infinity | | | | |
| S1 | 1.869 | 0.667 | 1.430 | 4.42 | 1.544 | 56.09 |
| S2 | 7.193 | 0.100 | 1.343 | | | |
| S3 | 4.195 | 0.589 | 1.298 | 5.12 | 1.535 | 55.71 |
| S4 | -7.600 | 0.148 | 1.215 | | | |
| S5 | -12.211 | 0.230 | 1.076 | -3.37 | 1.614 | 25.95 |
| S6 | 2.542 | 0.450 | 0.895 | | | |
| S7(STO) | infinity | 0.330 | 0.790 | | | |
| S8 | -11.594 | 0.230 | 0.863 | -15.66 | 1.671 | 19.23 |
| S9 | 129.308 | 1.113 | 0.925 | | | |
| S10 | -15.982 | 0.353 | 1.420 | -3.75 | 1.544 | 56.09 |
| S11 | 2.366 | 0.241 | 1.779 | | | |
| S12 | 4.672 | 0.987 | 1.868 | 6.67 | 1.671 | 19.23 |
| S13 | -132.743 | 0.100 | 2.023 | | | |
| S14 | infinity | 0.110 | 2.162 | | 1.517 | 64.2 |
| S15 | infinity | 0.459 | 2.174 | | | |
| img | infinity | -0.012 | 2.252 | | | |

[Table 5]

| | S1 | S2 | S3 | S4 | S5 | S6 |
|---|---|---|---|---|---|---|
| K | 6.404E-02 | 2.267E+01 | 7.446E+00 | -1.000E+00 | -1.000E+00 | 0.000E+00 |
| A(4th) | -5.421E-03 | 1.572E-02 | 1.699E-02 | 4.014E-02 | 5.552E-03 | -5.485E-02 |
| B(6th) | 1.917E-03 | 1.374E-02 | 2.315E-02 | 3.055E-02 | -5.824E-02 | 9.252E-02 |
| C(8th) | -6.956E-03 | -1.297E-02 | -2.73 1E-02 | -1.999E-01 | 5.973E-01 | -5.735E-02 |
| D(10th) | 1.130E-02 | -4.101E-03 | 9.776E-03 | 4.947E-01 | -2.369E+00 | 4.294E-02 |
| E(12th) | -1.296E-02 | 1.257E-02 | -1.496E-03 | -8.449E-01 | 5.446E+00 | 3.061E-02 |
| F(14th) | 9.325E-03 | -8.251E-03 | -2.381E-04 | 9.648E-01 | -7.873E+00 | -2.132E-02 |

(continued)

| | S1 | S2 | S3 | S4 | S5 | S6 |
|---|---|---|---|---|---|---|
| G(16th) | -3.974E-03 | 2.347E-03 | 0.000E+00 | -7.055E-01 | 7.329E+00 | 0.000E+00 |
| H(18th) | 8.944E-04 | -2.511E-04 | 0.000E+00 | 3.151E-01 | -4.280E+00 | 0.000E+00 |
| J(20th) | -8.156E-05 | 0.000E+00 | 0.000E+00 | -7.802E-02 | 1.428E+00 | 0.000E+00 |
| K(22nd) | 0.000E+00 | 0.000E+00 | 0.000E+00 | 8.186E-03 | -2.078E-01 | 0.000E+00 |
| L(24th) | 0.000E+00 | 0.000E+00 | 0.000E+00 | 0.000E+00 | 0.000E+00 | 0.000E+00 |
| M(26th) | 0.000E+00 | 0.000E+00 | 0.000E+00 | 0.000E+00 | 0.000E+00 | 0.000E+00 |
| N(28th) | 0.000E+00 | 0.000E+00 | 0.000E+00 | 0.000E+00 | 0.000E+00 | 0.000E+00 |
| O(30th) | 0.000E+00 | 0.000E+00 | 0.000E+00 | 0.000E+00 | 0.000E+00 | 0.000E+00 |

Table 6]

| | S8 | S9 | S10 | S11 | S12 | S13 |
|---|---|---|---|---|---|---|
| K | 0.000E+00 | 0.000E+00 | 0.000E+00 | 0.000E+00 | -1.298E+01 | -6.651E+22 |
| A(4th) | -6.262E-02 | 3.866E-03 | -9.282E-02 | -1.311E-01 | -2.815E-02 | -7.917E-02 |
| B(6th) | 3.520E-02 | 3.795E-02 | 4.120E-02 | 3.293E-02 | -1.147E-02 | 2.015E-02 |
| C(8th) | -3.825E-02 | 4.291E-02 | -2.407E-02 | 1.583E-02 | 2.272E-02 | -5.934E-03 |
| D(10th) | 2.627E-01 | -4.657E-02 | 1.777E-02 | -3.532E-02 | -1.892E-02 | 1.394E-03 |
| E(12th) | -5.169E-01 | 4.827E-02 | -8.380E-03 | 2.757E-02 | 8.361E-03 | -2.537E-04 |
| F(14th) | 4.671E-01 | -3.647E-02 | 1.982E-03 | -1.305E-02 | -2.033E-03 | 3.420E-05 |
| G(16th) | -1.691E-01 | 9.028E-03 | -2.245E-04 | 4.077E-03 | 2.570E-04 | -2.130E-06 |
| H(18th) | 0.000E+00 | 0.000E+00 | 1.375E-05 | -8.545E-04 | -1.317E-05 | -8.336E-10 |
| J(20th) | 0.000E+00 | 0.000E+00 | 0.000E+00 | 1.165E-04 | 0.000E+00 | 0.000E+00 |
| K(22nd) | 0.000E+00 | 0.000E+00 | 0.000E+00 | -9.476E-06 | 0.000E+00 | 0.000E+00 |
| L(24th) | 0.000E+00 | 0.000E+00 | 0.000E+00 | 3.561E-07 | 0.000E+00 | 0.000E+00 |
| M(26th) | 0.000E+00 | 0.000E+00 | 0.000E+00 | 0.000E+00 | 0.000E+00 | 0.000E+00 |
| N(28th) | 0.000E+00 | 0.000E+00 | 0.000E+00 | 0.000E+00 | 0.000E+00 | 0.000E+00 |
| O(30th) | 0.000E+00 | 0.000E+00 | 0.000E+00 | 0.000E+00 | 0.000E+00 | 0.000E+00 |

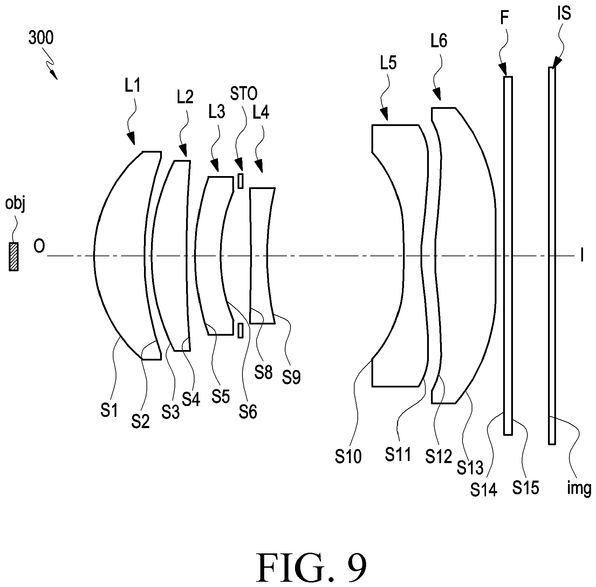

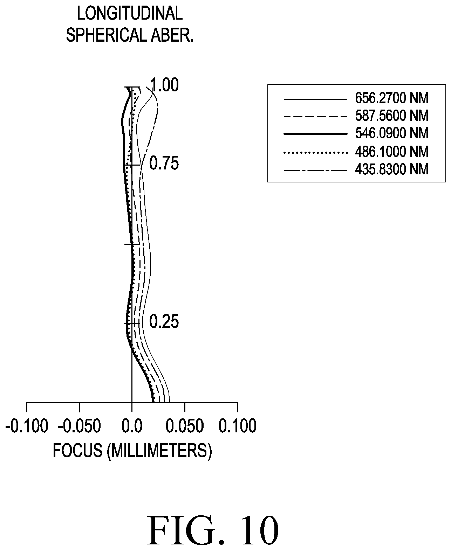

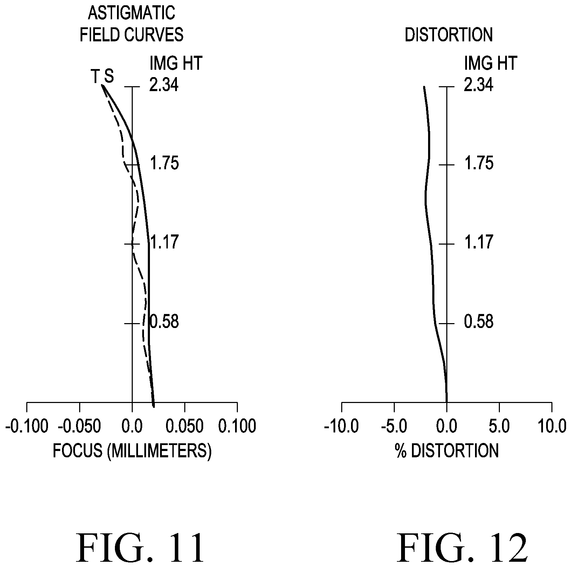

FIG. 9 is a view illustrating the configuration of a lens assembly 300 according to another one of various embodiments. FIG. 10 is a graph illustrating spherical aberration of the lens assembly 300 illustrated in FIG. 9. FIG. 11 is a graph illustrating astigmatism of the lens assembly 300 illustrated in FIG. 9. FIG. 12 is a graph illustrating distortion aberration of the lens assembly 300 illustrated in FIG. 9. Referring to FIGS. 9 to 12, a lens assembly 300 according to another one of various embodiments of the disclosure may include a plurality of lenses L1, L2, L3, L4, L5, and L6, an image sensor IS, and/or a filter F.

In Table 7 below, various lens data of the lens assembly 300 may be listed, and in each of Tables 8 and 9 below, aspheric coefficients of the plurality of lenses L1, L2, L3, L4, L5, and L6 may be listed. Here, the lens assembly 300, which has a F-number (Fno) of about 2.46, a focal length of about 7.03 mm, an overall optical length of about 6.078 mm, and an image height of 2.34 mm, may satisfy the conditions described above (and/or at least one of the above-mentioned conditions).

Table 7]

| surface | radius | thickness | H-ape | efl | nd | $V_d$ |
|---|---|---|---|---|---|---|
| obj | infinity | infinity | | | | |
| S1 | 1.862 | 0.659 | 1.441 | 4.39 | 1.544 | 56.09 |

(continued)

| surface | radius | thickness | H-ape | efl | nd | $V_d$ |
|---|---|---|---|---|---|---|
| S2 | 7.277 | 0.121 | 1.354 | | | |
| S3 | 4.204 | 0.489 | 1.302 | 11.20 | 1.544 | 56.09 |
| S4 | 12.876 | 0.101 | 1.208 | | | |
| S5 | 5.397 | 0.250 | 1.097 | -6.42 | 1.661 | 20.37 |
| S6 | 2.346 | 0.200 | 0.939 | | | |
| S7(STO) | infinity | 0.111 | 0.937 | | | |
| S8 | 16.245 | 0.250 | 0.932 | -14.67 | 1.671 | 19.23 |
| S9 | 6.137 | 1.828 | 0.940 | | | |
| S10 | -19.526 | 0.282 | 1.450 | -4.33 | 1.544 | 56.09 |
| S11 | 2.709 | 0.217 | 1.785 | | | |
| S12 | 9.417 | 0.705 | 1.937 | 8.97 | 1.671 | 19.23 |
| S13 | -16.729 | 0.100 | 2.038 | | | |
| S14 | infinity | 0.110 | 2.188 | | 1.517 | 64.2 |
| S15 | infinity | 0.678 | 2.202 | | | |
| img | infinity | -0.020 | 2.344 | | | |

[Table 8]

| | S1 | S2 | S3 | S4 | S5 | S6 |
|---|---|---|---|---|---|---|
| K | 2.836E-02 | 2.324E+01 | 7.613E+00 | -1.000E+00 | -1.000E+00 | 0.000E+00 |
| A(4th) | -7.502E-03 | -2.074E-02 | -2.926E-02 | -2.316E-02 | -2.738E-02 | -7.252E-02 |
| B(6th) | -1.005E-03 | 1.151E-01 | 1.824E-01 | 3.467E-01 | 3.897E-01 | 5.153E-01 |
| C(8th) | 3.490E-03 | -1.856E-01 | -3.380E-01 | -1.319E+00 | -1.780E+00 | -3.268E+00 |
| D(10th) | -3.215E-03 | 1.803E-01 | 3.744E-01 | 2.917E+00 | 4.969E+00 | 1.316E+01 |
| E(12th) | -2.910E-03 | -1.053E-01 | -2.398E-01 | -4.000E+00 | -8.677E+00 | -3.326E+01 |
| F(14th) | 5.764E-03 | 3.571E-02 | 8.340E-02 | 3.467E+00 | 9.768E+00 | 5.344E+01 |
| G(16th) | -3.451E-03 | -6.543E-03 | -1.420E-02 | -1.907E+00 | -7.158E+00 | -5.316E+01 |
| H(18th) | 9.130E-04 | 5.027E-04 | 8.743E-04 | 6.481E-01 | 3.331E+00 | 2.991E+01 |
| J(20th) | -9.124E-05 | 0.000E+00 | 0.000E+00 | -1.249E-01 | -8.928E-01 | -7.264E+00 |
| K(22nd) | 0.000E+00 | 0.000E+00 | 0.000E+00 | 1.048E-02 | 1.032E-01 | 0.000E+00 |
| L(24th) | 0.000E+00 | 0.000E+00 | 0.000E+00 | 0.000E+00 | 0.000E+00 | 0.000E+00 |
| M(26th) | 0.000E+00 | 0.000E+00 | 0.000E+00 | 0.000E+00 | 0.000E+00 | 0.000E+00 |
| N(28th) | 0.000E+00 | 0.000E+00 | 0.000E+00 | 0.000E+00 | 0.000E+00 | 0.000E+00 |
| O(30th) | 0.000E+00 | 0.000E+00 | 0.000E+00 | 0.000E+00 | 0.000E+00 | 0.000E+00 |

[Table 9]

| | S8 | S9 | S10 | S11 | S12 | S13 |
|---|---|---|---|---|---|---|
| K | 0.000E+00 | 0.000E+00 | 0.000E+00 | 0.000E+00 | -2.865E+00 | 0.000E+00 |
| A(4th) | -6.245E-02 | 5.369E-03 | -1.568E-01 | -1.530E-01 | -4.688E-02 | -1.048E-01 |
| B(6th) | 1.245E-01 | 1.852E-01 | 4.823E-02 | 2.597E-02 | 2.307E-02 | 1.208E-01 |
| C(8th) | -6.760E-01 | -9.929E-01 | -2.845E-02 | 3.480E-02 | -1.488E-02 | -1.322E-01 |

(continued)

|  | S8 | S9 | S10 | S11 | S12 | S13 |
|---|---|---|---|---|---|---|
| D(10th) | 2.218E+00 | 3.749E+00 | 1.820E-02 | -3.270E-02 | 5.812E-03 | 8.979E-02 |
| E(12th) | -4.184E+00 | -8.575E+00 | -7.733E-03 | -1.772E-02 | -1.294E-03 | -3.630E-02 |
| F(14th) | 4.351E+00 | 1.206E+01 | 1.846E-03 | 4.410E-02 | 1.628E-04 | 8.598E-03 |
| G(16th) | -2.214E+00 | -1.009E+01 | -2.243E-04 | -3.142E-02 | -1.065E-05 | -1.106E-03 |
| H(18th) | 3.865E-01 | 4.578E+00 | 1.177E-05 | 1.186E-02 | 2.526E-07 | 5.979E-05 |
| J(20th) | 0.000E+00 | -8.668E-01 | 0.000E+00 | -2.546E-03 | 0.000E+00 | 0.000E+00 |
| K(22nd) | 0.000E+00 | 0.000E+00 | 0.000E+00 | 2.925E-04 | 0.000E+00 | 0.000E+00 |
| L(24th) | 0.000E+00 | 0.000E+00 | 0.000E+00 | -1.395E-05 | 0.000E+00 | 0.000E+00 |
| M(26th) | 0.000E+00 | 0.000E+00 | 0.000E+00 | 0.000E+00 | 0.000E+00 | 0.000E+00 |
| N(28th) | 0.000E+00 | 0.000E+00 | 0.000E+00 | 0.000E+00 | 0.000E+00 | 0.000E+00 |
| O(30th) | 0.000E+00 | 0.000E+00 | 0.000E+00 | 0.000E+00 | 0.000E+00 | 0.000E+00 |

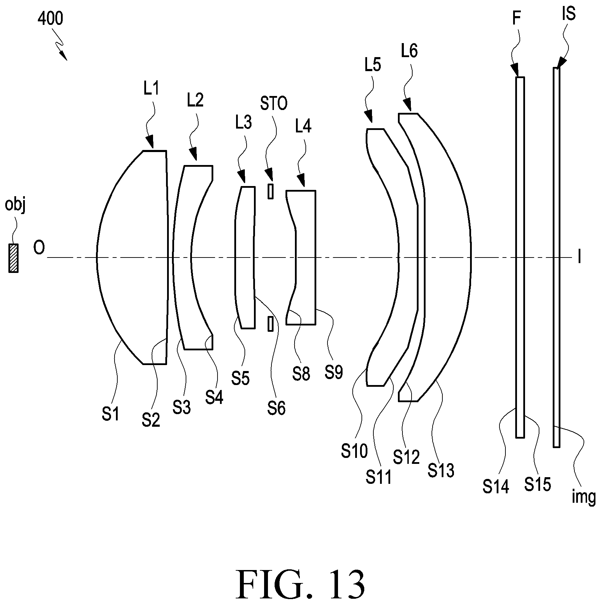

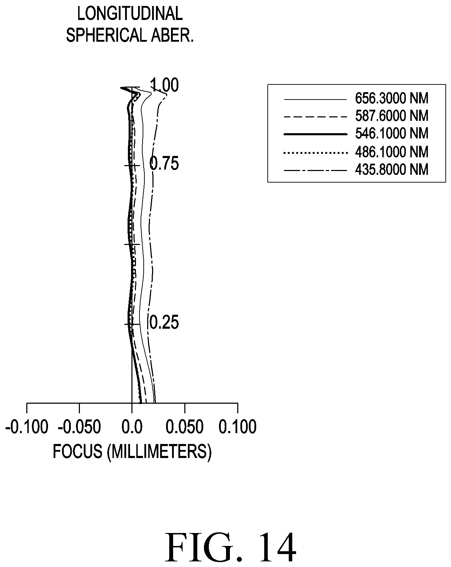

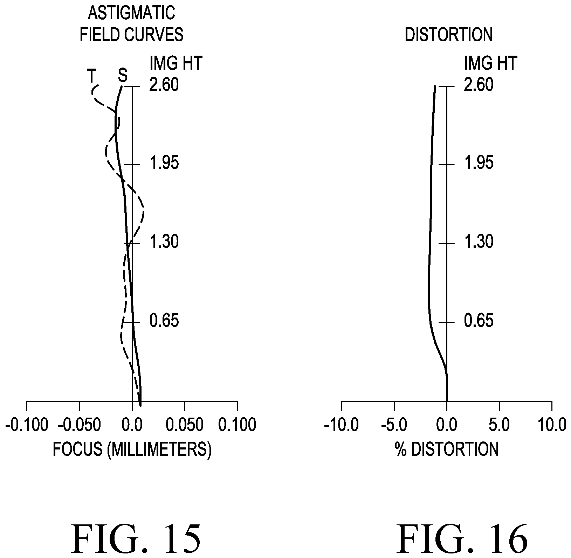

FIG. 13 is a view illustrating the configuration of a lens assembly 400 according to another one of various embodiments. FIG. 14 is a graph illustrating spherical aberration of the lens assembly 400 illustrated in FIG. 13. FIG. 14 is a graph illustrating astigmatism of the lens assembly 400 illustrated in FIG. 13. FIG. 15 is a graph illustrating distortion aberration of the lens assembly 400 illustrated in FIG. 13. Referring to FIGS. 13 to 16, a lens assembly 400 according to another one of various embodiments of the disclosure may include a plurality of lenses L1, L2, L3, L4, L5, and L6, an image sensor IS, and/or a filter F.

In Table 10 below, various lens data of the lens assembly 400 may be listed, and in each of Tables 11 and 12 below, aspheric coefficients of the plurality of lenses L1, L2, L3, L4, L5, and L6 may be listed. Here, the lens assembly 400, which has a F-number (Fno) of about 2.458, a focal length of about 7.03 mm, an overall optical length of about 5.980 mm, and an image height of 2.60 mm, may satisfy the conditions described above (and/or at least one of the above-mentioned conditions).

Table 10]

| surface | radius | thickness | H-ape | efl | nd | $V_d$ |
|---|---|---|---|---|---|---|
| obj | infinity | infinity |  |  |  |  |
| S1 | 1.787 | 0.966 | 1.430 | 2.89 | 1.544 | 55.99 |
| S2 | -10.928 | 0.054 | 1.343 |  |  |  |
| S3 | 7.040 | 0.250 | 1.213 | -5.98 | 1.661 | 20.38 |
| S4 | 2.514 | 0.574 | 1.035 |  |  |  |
| S5 | 11.545 | 0.250 | 0.926 | -32.28 | 1.535 | 55.74 |
| S6 | 6.878 | 0.208 | 0.869 |  |  |  |
| S7(STO) | infinity | 0.368 | 0.783 |  |  |  |
| S8 | -19.968 | 0.250 | 0.799 | -8.76 | 1.567 | 37.4 |
| S9 | 6.705 | 1.115 | 0.900 |  |  |  |
| S10 | -2.381 | 0.250 | 1.594 | -4.83 | 1.544 | 55.99 |
| S11 | -25.226 | 0.100 | 1.712 |  |  |  |
| S12 | 8.346 | 0.615 | 1.799 | 7.70 | 1.661 | 20.38 |
| S13 | -13.006 | 0.700 | 1.913 |  |  |  |
| S14 | infinity | 0.110 | 2.500 |  | 1.517 | 64.2 |
| S15 | infinity | 0.179 | 2.528 |  |  |  |
| img | infinity | -0.009 | 2.600 |  |  |  |

[Table 11]

|  | S1 | S2 | S3 | S4 | S5 | S6 |
|---|---|---|---|---|---|---|
| K | -1.376E-01 | -1.688E+01 | 1.753E+01 | 2.687E+00 | -1.829E+01 | -1.587E+01 |
| A($4^{th}$) | 9.549E-05 | -1.613E-02 | -8.188E-02 | -7.953E-02 | -5.759E-03 | -9.306E-02 |
| B($6^{th}$) | -6.035E-03 | 1.600E-01 | 2.679E-01 | 1.803E-01 | 1.377E-01 | 2.648E-01 |
| C($8^{th}$) | 1.372E-02 | -3.841E-01 | -4.421E-01 | -8.560E-03 | 1.374E-01 | -1.092E+00 |
| D($10^{th}$) | -2.654E-02 | 5.717E-01 | 5.253E-01 | -7.328E-01 | -7.867E-01 | 4.942E+00 |
| E($12^{th}$) | 2.735E-02 | -5.567E-01 | -3.579E-01 | 2.479E+00 | 1.859E+00 | -1.464E+01 |
| F($14^{th}$) | -1.735E-02 | 3.503E-01 | 5.902E-02 | -4.234E+00 | -2.945E+00 | 2.627E+01 |
| G($16^{th}$) | 6.653E-03 | -1.371E-01 | 8.461E-02 | 4.029E+00 | 3.048E+00 | -2.796E+01 |
| H($18^{th}$) | -1.449E-03 | 3.032E-02 | -5.597E-02 | -2.040E+00 | -1.801E+00 | 1.622E+01 |
| J($20^{th}$) | 1.393E-04 | -2.897E-03 | 1.070E-02 | 4.273E-01 | 4.268E-01 | -3.991E+00 |
| K($22^{nd}$) | 0.000E+00 | 0.000E+00 | 0.000E+00 | 0.000E+00 | 0.000E+00 | 0.000E+00 |
| L($24^{th}$) | 0.000E+00 | 0.000E+00 | 0.000E+00 | 0.000E+00 | 0.000E+00 | 0.000E+00 |
| M($26^{th}$) | 0.000E+00 | 0.000E+00 | 0.000E+00 | 0.000E+00 | 0.000E+00 | 0.000E+00 |
| N($28^{th}$) | 0.000E+00 | 0.000E+00 | 0.000E+00 | 0.000E+00 | 0.000E+00 | 0.000E+00 |
| O($30^{th}$) | 0.000E+00 | 0.000E+00 | 0.000E+00 | 0.000E+00 | 0.000E+00 | 0.000E+00 |

[Table 12]

|  | S8 | S9 | S10 | S11 | S12 | S13 |
|---|---|---|---|---|---|---|
| K | 9.000E+01 | 1.198E+01 | -2.269E+01 | 1.191E+02 | -8.914E+01 | 0.000E+00 |
| A($4^{th}$) | -3.660E-01 | -2.440E-01 | 5.692E-02 | 1.239E-01 | -2.344E-01 | -2.235E-01 |
| B($6^{th}$) | 6.236E-02 | 1.425E-01 | -6.765E-01 | -4.729E-01 | 4.699E-01 | 2.797E-01 |
| C($8^{th}$) | 2.031E-01 | 1.371E-01 | 1.380E+00 | 5.641E-01 | -7.438E-01 | -2.436E-01 |
| D($10^{th}$) | -1.952E-01 | -1.299E-01 | -1.639E+00 | -3.347E-01 | 7.822E-01 | 1.288E-01 |
| E($12^{th}$) | 0.000E+00 | 3.770E-02 | 1.261E+00 | 6.308E-02 | -5.336E-01 | -3.712E-02 |
| F($14^{th}$) | 0.000E+00 | 0.000E+00 | -6.218E-01 | 3.567E-02 | 2.301E-01 | 3.219E-03 |
| G($16^{th}$) | 0.000E+00 | 0.000E+00 | 1.884E-01 | -2.378E-02 | -6.016E-02 | 1.064E-03 |
| H($18^{th}$) | 0.000E+00 | 0.000E+00 | -3.183E-02 | 5.265E-03 | 8.694E-03 | -2.944E-04 |
| J($20^{th}$) | 0.000E+00 | 0.000E+00 | 2.292E-03 | -4.186E-04 | -5.331E-04 | 2.124E-05 |
| K($22^{nd}$) | 0.000E+00 | 0.000E+00 | 0.000E+00 | 0.000E+00 | 0.000E+00 | 0.000E+00 |
| L($24^{th}$) | 0.000E+00 | 0.000E+00 | 0.000E+00 | 0.000E+00 | 0.000E+00 | 0.000E+00 |
| M($26^{th}$) | 0.000E+00 | 0.000E+00 | 0.000E+00 | 0.000E+00 | 0.000E+00 | 0.000E+00 |
| N($28^{th}$) | 0.000E+00 | 0.000E+00 | 0.000E+00 | 0.000E+00 | 0.000E+00 | 0.000E+00 |
| O($30^{th}$) | 0.000E+00 | 0.000E+00 | 0.000E+00 | 0.000E+00 | 0.000E+00 | 0.000E+00 |

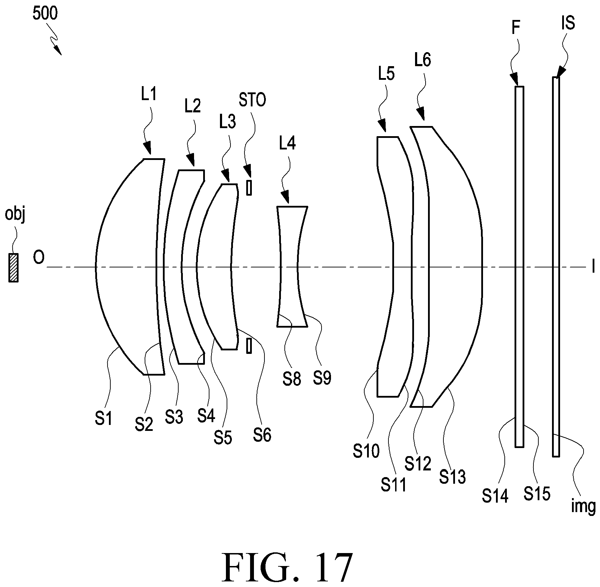

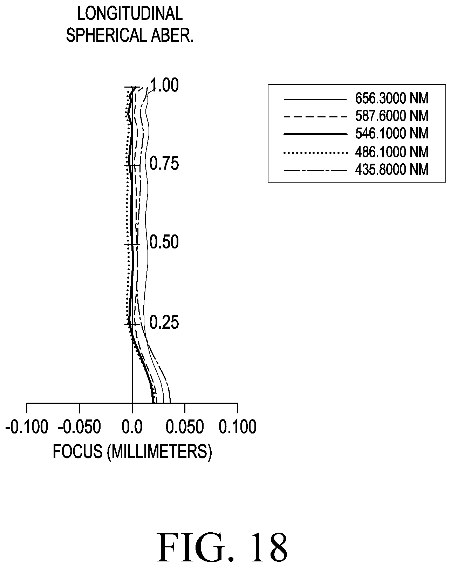

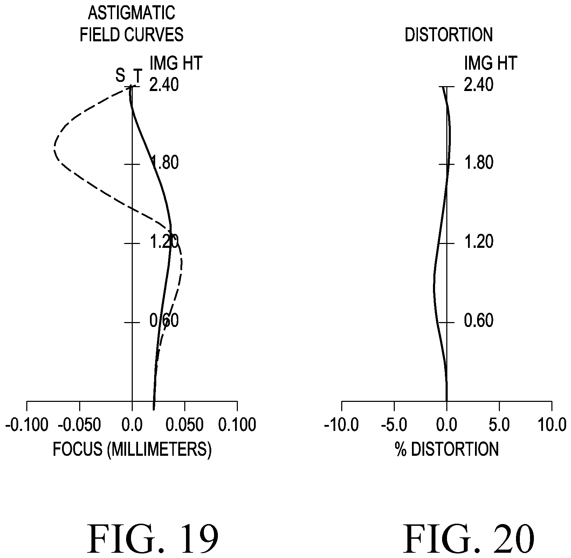

FIG. 17 is a view illustrating the configuration of a lens assembly 500 according to another one of various embodiments. FIG. 18 is a graph illustrating spherical aberration of the lens assembly 500 illustrated in FIG. 17. FIG. 19 is a graph illustrating astigmatism of the lens assembly 500 illustrated in FIG. 17. FIG. 20 is a graph illustrating distortion aberration of the lens assembly 500 illustrated in FIG. 17. Referring to FIGS. 17 to 20, a lens assembly 500 according to another one of various embodiments of the disclosure may include a plurality of lenses L1, L2, L3, L4, L5, and L6, an image sensor IS, and/or a filter F.

In Table 13 below, various lens data of the lens assembly 500 may be listed, and in each of Tables 14 and 15 below, aspheric coefficients of the plurality of lenses L1, L2, L3, L4, L5, and L6 may be listed. Here, the lens assembly 500, which has a F-number (Fno) of about 2.48, a composite focal length of about 7.03 mm, an overall optical length of about 5.940 mm, and an image height of 2.40 mm, may satisfy the conditions described above (and/or at least one of the above-mentioned conditions).

Table 13]

| surface | radius | thickness | H-ape | efl | nd | $V_d$ |
|---|---|---|---|---|---|---|
| obj | infinity | infinity | | | | |
| S1 | 1.842 | 0.782 | 1.418 | 3.61 | 1.535 | 55.74 |
| S2 | 31.210 | 0.100 | 1.346 | | | |
| S3 | 6.026 | 0.242 | 1.268 | -7.31 | 1.650 | 21.52 |
| S4 | 2.632 | 0.199 | 1.128 | | | |
| S5 | 2.162 | 0.450 | 1.078 | 11.08 | 1.535 | 55.74 |
| S6 | 3.148 | 0.196 | 0.996 | | | |
| S7(STO) | infinity | 0.454 | 0.937 | | | |
| S8 | 15.912 | 0.230 | 0.756 | -5.08 | 1.614 | 25.95 |
| S9 | 2.617 | 1.258 | 0.790 | | | |
| S10 | -3.938 | 0.230 | 1.540 | -5.26 | 1.535 | 55.74 |
| S11 | 10.189 | 0.233 | 1.696 | | | |
| S12 | 35.270 | 0.706 | 1.750 | 7.27 | 1.680 | 18.41 |
| S13 | -5.782 | 0.500 | 1.842 | | | |
| S14 | infinity | 0.110 | 2.284 | | 1.517 | 64.17 |
| S15 | infinity | 0.270 | 2.310 | | | |
| img | infinity | -0.020 | 2.405 | | | |

Table 14]

| | S1 | S2 | S3 | S4 | S5 | S6 |
|---|---|---|---|---|---|---|
| K | -8.323E-01 | 6.500E+01 | 5.829E-01 | -7.834E-01 | -3.345E-01 | -6.293E-01 |
| A(4th) | 1.371E-02 | 3.840E-02 | 7.603E-03 | -3.680E-02 | -6.450E-02 | -1.610E-01 |
| B(6th) | -7.000E-03 | -8.531E-02 | 2.570E-03 | 7.142E-02 | -2.764E-02 | 3.217E-01 |
| C(8th) | 2.684E-02 | 2.117E-01 | 6.652E-02 | 2.869E-01 | 9.378E-01 | -7.811E-01 |
| D(10th) | -4.618E-02 | -3.049E-01 | -1.571E-01 | -1.184E+00 | -3.032E+00 | 9.986E-01 |
| E(12th) | 4.865E-02 | 2.880E-01 | 1.918E-01 | 2.060E+00 | 5.271E+00 | 1.367E+00 |
| F(14th) | -2.943E-02 | -1.781E-01 | -1.234E-01 | -1.879E+00 | -5.166E+00 | -7.185E+00 |
| G(16th) | 9.317E-03 | 7.094E-02 | 3.517E-02 | 8.709E-01 | 2.691E+00 | 1.175E+01 |
| H(18th) | -1.012E-03 | -1.724E-02 | -8.445E-04 | -1.618E-01 | -5.857E-01 | -9.934E+00 |
| J(20th) | -9.377E-05 | 1.948E-03 | -1.031E-03 | 0.000E+00 | 0.000E+00 | 4.321E+00 |
| K(22nd) | 0.000E+00 | 0.000E+00 | 0.000E+00 | 0.000E+00 | 0.000E+00 | -7.625E-01 |
| L(24th) | 0.000E+00 | 0.000E+00 | 0.000E+00 | 0.000E+00 | 0.000E+00 | 0.000E+00 |
| M(26th) | 0.000E+00 | 0.000E+00 | 0.000E+00 | 0.000E+00 | 0.000E+00 | 0.000E+00 |
| N(28th) | 0.000E+00 | 0.000E+00 | 0.000E+00 | 0.000E+00 | 0.000E+00 | 0.000E+00 |
| O(30th) | 0.000E+00 | 0.000E+00 | 0.000E+00 | 0.000E+00 | 0.000E+00 | 0.000E+00 |

[Table 15]

| | S8 | S9 | S10 | S11 | S12 | S13 |
|---|---|---|---|---|---|---|
| K | 0.000E+00 | 1.241E+00 | 0.000E+00 | 3.277E+01 | -6.500E+01 | 4.687E+00 |
| A(4th) | -2.780E-01 | -1.445E-01 | 1.355E-01 | 2.489E-01 | 5.283E-02 | -7.418E-02 |
| B(6th) | 1.762E-01 | 1.781E-01 | -7.189E-01 | -1.070E+00 | -1.744E-01 | 8.742E-02 |
| C(8th) | 9.389E-02 | 2.880E-01 | 1.485E+00 | 1.977E+00 | 1.206E-01 | -1.544E-01 |
| D(10th) | -2.352E-01 | 1.603E+00 | -1.757E+00 | -2.288E+00 | 9.365E-02 | 1.917E-01 |
| E(12th) | 0.000E+00 | -1.731E+01 | 1.333E+00 | 1.796E+00 | -2.352E-01 | -1.428E-01 |
| F(14th) | 0.000E+00 | 6.080E+01 | -6.558E-01 | -9.964E-01 | 1.941E-01 | 6.362E-02 |
| G(16th) | 0.000E+00 | -1.088E+02 | 2.023E-01 | 3.964E-01 | -8.910E-02 | -1.675E-02 |
| H(18th) | 0.000E+00 | 9.922E+01 | -3.555E-02 | -1.119E-01 | 2.432E-02 | 2.361E-03 |
| J(20th) | 0.000E+00 | -3.657E+01 | 2.713E-03 | 2.145E-02 | -3.695E-03 | -1.194E-04 |
| K(22nd) | 0.000E+00 | 0.000E+00 | 0.000E+00 | -2.508E-03 | 2.404E-04 | -3.570E-06 |
| L(24th) | 0.000E+00 | 0.000E+00 | 0.000E+00 | 1.343E-04 | 0.000E+00 | 0.000E+00 |
| M(26th) | 0.000E+00 | 0.000E+00 | 0.000E+00 | 0.000E+00 | 0.000E+00 | 0.000E+00 |
| N(28th) | 0.000E+00 | 0.000E+00 | 0.000E+00 | 0.000E+00 | 0.000E+00 | 0.000E+00 |
| O(30th) | 0.000E+00 | 0.000E+00 | 0.000E+00 | 0.000E+00 | 0.000E+00 | 0.000E+00 |

From the above-described embodiments, various data about lenses may be identified in lens assemblies (e.g., 100, 200, 300, 400, and 500) and/or an electron device including the lens assemblies (e.g., 100, 200, 300, 400, and 500). The data may satisfy the above-mentioned requirements, e.g., the results of Conditional Expressions 1 to 4.

[Table 16]

| division | Embodiment 1 | Embodiment 2 | Embodiment 3 | Embodiment 4 | Embodiment 5 |
|---|---|---|---|---|---|
| TL | 5.88 | 6.10 | 6.08 | 5.98 | 5.94 |
| f | 7.03 | 7.00 | 7.03 | 7.03 | 7.03 |
| SL | 3.90 | 3.91 | 4.26 | 3.68 | 3.97 |
| T12 | 0.10 | 0.10 | 0.12 | 0.05 | 0.10 |
| T23 | 0.11 | 0.15 | 0.10 | 0.57 | 0.20 |
| T34 | 0.59 | 0.78 | 0.31 | 0.58 | 0.65 |
| T45 | 1.28 | 1.11 | 1.83 | 1.11 | 1.26 |
| TL/f | 0.84 | 0.87 | 0.86 | 0.85 | 0.84 |
| T34/T45 | 0.46 | 0.70 | 0.17 | 0.52 | 0.52 |
| SL/TL | 0.66 | 0.64 | 0.70 | 0.61 | 0.67 |
| (T12+T23)/ (T34+T45) | 0.11 | 0.13 | 0.10 | 0.37 | 0.16 |

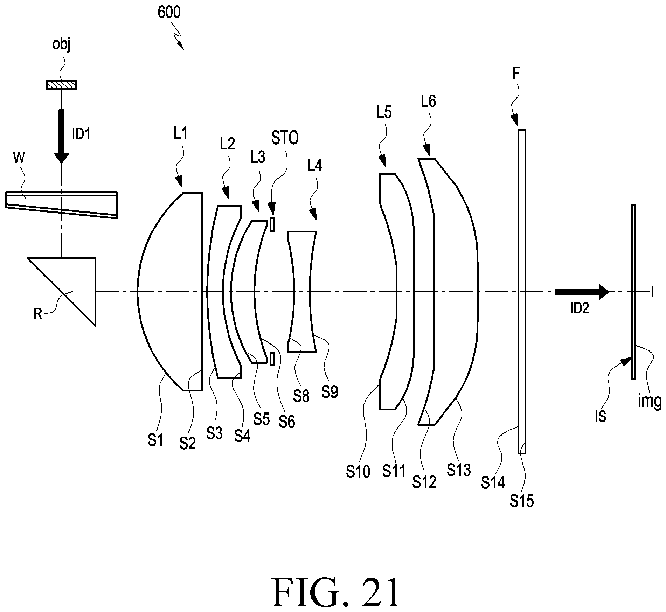

In Table 16, "Embodiment 1" represents the lens assembly 100 illustrated in FIG. 1, "Embodiment 2" represents the lens assembly 200 illustrated in FIG. 5, "Embodiment 3" represents the lens assembly 300 illustrated in FIG. 9, "Embodiment 4" represents the lens assembly 400 illustrated in FIG. 13, and "Embodiment 5" represents the lens assembly 500 illustrated in FIG. 17. The lens assemblies (e.g., 100, 100, 200, 300, 400, and 500) according to various embodiments described above may be mounted and used in an electronic device (e.g., an optical device). In addition to the image sensor IS, an electronic device (e.g., an optical device) may further include an application processor (AP), and drive, for example, an operating system or application program through the application processor (AP) to control multiple hardware or software components connected to the processor (AP) and execute various data processes and calculations. As an example, the application processor (AP) may further include a graphics processing unit (GPU) and/or an image signal processor. When the application processor (AP) includes an image signal processor, an image (or video) acquired by the image sensor IS may be stored or output by using the application processor (AP). FIG. 21 is a view illustrating the configuration of a lens assembly 600 according to another one of various embodiments.

Referring to FIG. 21, the lens assembly 600 may further include an optical member that refracts or reflects light incident from the outside to guide the light toward the first lens L1 and/or the image sensor IS. The lens assembly 600 illustrated in FIG. 21 relates to, for example, a folded optical system in which, for example, external light may be incident on an optical member along a first incident direction ID1 and may be refracted or reflected by the optical member to proceed along a second incident direction ID2. The lens assembly 600 illustrated in FIG. 21 may correspond to one of the lens assemblies (e.g., 100, 200, 300, 400, and 500) of FIGS. 1, 5, 9, 13, and 17.

According to various embodiments, the optical member may include a first optical member R and a second optical member W. According to an embodiment, the first optical member R may include a mirror or a prism with a triangular cross-section. The second optical member W may include a prism with a wedge-shaped cross-section or a prism with a shape that is variable into a wedge-shaped cross-section. The first optical member R may serve to transform the first optical path ID1 of light incident in a direction crossing the optical axis into the second optical path ID2. The second optical member W may be disposed closer to an object obj than the first optical member and may serve to change the angle of incidence of the first optical path ID1. The second optical member W may easily change the direction of light incident on the second optical member W and light emitted from the second optical member W so that the second optical member can be easily applied to optical image stabilization (OIS), but has the disadvantage of easily causing chromatic aberration. Accordingly, the lens assembly 600 (e.g., the lens assemblies 100, 200, 300, 400, and 500 in FIGS. 1, 5, 9, 13, and 17) has the advantage of effectively reducing and/or preventing chromatic aberration by satisfy at least some of the conditions regarding the focal lengths or Abe's numbers or angles of view in the above-described conditional expressions (Conditional Expressions 1 to 4).

Meanwhile, although not illustrated, the lens assembly 600 may further include a third optical member (not illustrated) disposed between the first lens on the image sensor side IS (e.g., sixth lens L6) on the image sensor IS and the infrared cut filter F and/or between the infrared cut filter F and the image sensor IS. The third optical member may refract or reflect light proceeding along the second incident direction ID2 to guide the light to the image sensor IS along a third incident direction different from the second incident direction ID2.

According to various embodiments, the quality of images captured by an electronic device can be improved when the electronic device includes a high-performance, large-sized image sensor IS. However, as the image sensor IS becomes larger, it may be difficult for the corresponding lens assembly 600 to be equipped in a slimmer electronic device. For example, the thickness of the electronic device may increase due to the length or width of the image sensor IS. According to an embodiment, by including at least one optical member (R and/or W), it is possible to secure a degree of freedom for the lens assembly 600 with respect to the arrangement direction of the lenses L1, L2, L3, L4, L5, and L6 or the arrangement direction of the image sensor IS. As a result, even when the image sensor IS is enlarged, the image sensor can be easily equipped in a miniaturized and/or slimmer electronic device.

FIG. 22 is a block diagram illustrating an electronic device 2201 in a network environment 2200 according to various embodiments. Referring to FIG. 22, the electronic device 2201 in the network environment 2200 may communicate with an electronic device 2202 via a first network 2298 (e.g., a short-range wireless communication network), or an electronic device 2204 or a server 2208 via a second network 2299 (e.g., a long-range wireless communication network). According to an embodiment, the electronic device 2201 may communicate with the electronic device 2204 via the server 2208. According to an embodiment, the electronic device 2201 may include a processor 2220, memory 2230, an input module 2250, a sound output module 2255, a display module 2260, an audio module 2270, a sensor module 2276, an interface 2277, a connecting terminal 2278, a haptic module 2279, a camera module 2280, a power management module 2288, a battery 2289, a communication module 2290, a subscriber identification module (SIM) 2296, or an antenna module 2297. In some embodiments, at least one of the components (e.g., the display module 2260 or the camera module) may be omitted from the electronic device 2201, or one or more other components may be added in the electronic device 2201. In some embodiments, some of the components (e.g., the sensor module 2276, the camera module 2280, or the antenna module 2297) may be implemented as a single component (e.g., the display module 2260).

The processor 2220 may execute, for example, software (e.g., a program 2240) to control at least one other component (e.g., a hardware or software component) of the electronic device 2201 coupled with the processor 2220, and may perform various data processing or computation. According to one embodiment, as at least part of the data processing or computation, the processor 2220 may store a command or data received from another component (e.g., the sensor module 2276 or the communication module 2290) in volatile memory 2232, process the command or the data stored in the volatile memory 2232, and store resulting data in non-volatile memory 2234. According to an embodiment, the processor 2220 may include a main processor 2221 (e.g., a central processing unit (CPU) or an application processor (AP)), or an auxiliary processor 2223 (e.g., a graphics processing unit (GPU), a neural processing unit (NPU), an image signal processor (ISP), a sensor hub processor, or a communication processor (CP)) that is operable independently from, or in conjunction with, the main processor 2221. For example, when the electronic device 2201 includes the main processor 2221 and the auxiliary processor 2223, the auxiliary processor 2223 may be adapted to consume less power than the main processor 2221, or to be specific to a specified function. The auxiliary processor 2223 may be implemented as separate from, or as part of the main processor 2221.

The auxiliary processor 2223 may control at least some of functions or states related to at least one component (e.g., the display module 2260, the sensor module 2276, or the communication module 2290) among the components of the electronic device 2201, instead of the main processor 2221 while the main processor 2221 is in an inactive (e.g., sleep) state, or together with the main processor 2221 while the main processor 2221 is in an active state (e.g., executing an application). According to an embodiment, the auxiliary processor 2223 (e.g., an image signal processor or a communication processor) may be implemented as part of another component (e.g., the camera module 2280 or the communication module 2290) functionally related to the auxiliary processor 2223. According to an embodiment, the auxiliary processor 2223 (e.g., the neural processing unit) may include a hardware structure specified for artificial intelligence model processing. An artificial intelligence model may be generated by machine learning. Such learning may be performed, e.g., by the electronic device 2201 where the artificial intelligence is performed or via a separate server (e.g., the server 2208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2230 may store various data used by at least one component (e.g., the processor 2220 or the sensor module 2276) of the electronic device 2201. The various data may include, for example, software (e.g., the program 2240) and input data or output data for a command related thereto. The memory 2230 may include the volatile memory 2232 or the non-volatile memory 2234.

The program 2240 may be stored in the memory 2230 as software, and may include, for example, an operating system (OS) 2242, middleware 2244, or an application 2246.

The input module 2250 may receive a command or data to be used by another component (e.g., the processor 2220) of the electronic device 2201, from the outside (e.g., a user) of the electronic device 2201. The input device 2250 may include, for example, a microphone, a mouse, a keyboard, a key (e.g., a button), or a digital pen (e.g., a stylus pen).

The sound output module 2255 may output sound signals to the outside of the electronic device 2201. The sound output module 2255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2260 may visually provide information to the outside (e.g., a user) of the electronic device 2201. The display module 2260 may include, for example, a display, a hologram device, or a projector and control circuitry to control a corresponding one of the display, hologram device, and projector. According to an embodiment, the display module 2260 may include a touch sensor adapted to detect a touch, or a pressure sensor adapted to measure the intensity of force incurred by the touch.

The audio module 2270 may convert a sound into an electrical signal and vice versa. According to an embodiment, the audio module 2270 may obtain the sound via the input module 2250, or output the sound via the sound output module 2255 or a headphone of an external electronic device (e.g., an electronic device 2202) directly (e.g., wiredly) or wirelessly coupled with the electronic device 2201.

The sensor module 2276 may detect an operational state (e.g., power or temperature) of the electronic device 2201 or an environmental state (e.g., a state of a user) external to the electronic device 2201, and then generate an electrical signal or data value corresponding to the detected state. According to an embodiment, the sensor module 2276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2277 may support one or more specified protocols to be used for the electronic device 2201 to be coupled with the external electronic device (e.g., the electronic device 2202) directly (e.g., wiredly) or wirelessly. According to an embodiment, the interface 2277 may include, for example, a high definition multimedia interface (HDMI), a universal serial bus (USB) interface, a secure digital (SD) card interface, or an audio interface.

A connecting terminal 2278 may include a connector via which the electronic device 2201 may be physically connected with the external electronic device (e.g., the electronic device 2202). According to an embodiment, the connecting terminal 2278 may include, for example, a HDMI connector, a USB connector, a SD card connector, or an audio connector (e.g., a headphone connector).

The haptic module 2279 may convert an electrical signal into a mechanical stimulus (e.g., a vibration or a movement) or electrical stimulus which may be recognized by a user via his tactile sensation or kinesthetic sensation.

According to an embodiment, the haptic module 2279 may include, for example, a motor, a piezoelectric element, or an electric stimulator.

The camera module 2280 may capture a still image or moving images. According to an embodiment, the camera module 2280 may include one or more lenses, image sensors, image signal processors, or flashes.

The power management module 2288 may manage power supplied to the electronic device 2201. According to one embodiment, the power management module 2288 may be implemented as at least part of, for example, a power management integrated circuit (PMIC).

The battery 2289 may supply power to at least one component of the electronic device 2201. According to an embodiment, the battery 2289 may include, for example, a primary cell which is not rechargeable, a secondary cell which is rechargeable, or a fuel cell.

The communication module 2290 may support establishing a direct (e.g., wired) communication channel or a wireless communication channel between the electronic device 2201 and the external electronic device (e.g., the electronic device 2202, the electronic device 2204, or the server 2208) and performing communication via the established communication channel. The communication module 2290 may include one or more communication processors that are operable independently from the processor 2220 (e.g., the application processor (AP)) and supports a direct (e.g., wired) communication or a wireless communication. According to an embodiment, the communication module 2290 may include a wireless communication module 2292 (e.g., a cellular communication module, a short-range wireless communication module, or a global navigation satellite system (GNSS) communication module) or a wired communication module 2294 (e.g., a local area network (LAN) communication module or a power line communication (PLC) module). A corresponding one of these communication modules may communicate with the external electronic device 2204 via the first network 2298 (e.g., a short-range communication network, such as BluetoothTM, wireless-fidelity (Wi-Fi) direct, or infrared data association (IrDA)) or the second network 2299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2292 may identify and authenticate the electronic device 2201 in a communication network, such as the first network 2298 or the second network 2299, using subscriber information (e.g., international mobile subscriber identity (IMSI)) stored in the subscriber identification module 2296.

The wireless communication module 2292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2292 may support a high-frequency band (e.g., the mmWave band) to achieve, e.g., a high data transmission rate. The wireless communication module 2292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2292 may support various requirements specified in the electronic device 2201, an external electronic device (e.g., the electronic device 2204), or a network system (e.g., the second network 2299). According to an embodiment, the wireless communication module 2292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 2297 may transmit or receive a signal or power to or from the outside (e.g., the external electronic device) of the electronic device 2201. According to an embodiment, the antenna module 2297 may include an antenna including a radiating element composed of a conductive material or a conductive pattern formed in or on a substrate (e.g., a printed circuit board (PCB)). According to an embodiment, the antenna module 2297 may include a plurality of antennas (e.g., array antennas). In such a case, at least one antenna appropriate for a communication scheme used in the communication network, such as the first network 2298 or the second network 2299, may be selected, for example, by the communication module 2290 (e.g., the wireless communication module 2292) from the plurality of antennas. The signal or the power may then be transmitted or received between the communication module 2290 and the external electronic device via the selected at least one antenna. According to an embodiment, another component (e.g., a radio frequency integrated circuit (RFIC)) other than the radiating element may be additionally formed as part of the antenna module 2297.

According to various embodiments, the antenna module 2297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g.,

commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2201 and the external electronic device 2204 via the server 2208 coupled with the second network 2299. Each of the electronic devices 2202 or 2204 may be a device of a same type as, or a different type, from the electronic device 2201. According to an embodiment, all or some of operations to be executed at the electronic device 2201 may be executed at one or more of the external electronic devices 2202, 2204, or 2208. For example, if the electronic device 2201 should perform a function or a service automatically, or in response to a request from a user or another device, the electronic device 2201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2201. The electronic device 2201 may provide the outcome, with or without further processing of the outcome, as at least part of a reply to the request. To that end, a cloud computing, distributed computing, mobile edge computing (MEC), or client-server computing technology may be used, for example.

The electronic device 2201 may provide ultra low-latency services using, e.g., distributed computing or mobile edge computing. In another embodiment, the external electronic device 2204 may include an internet-of-things (IoT) device. The server 2208 may be an intelligent server using machine learning and/or a neural network. According to an embodiment, the external electronic device 2204 or the server 2208 may be included in the second network 2299. The electronic device 2201 may be applied to intelligent services (e.g., smart home, smart city, smart car, or healthcare) based on 5G communication technology or IoT-related technology.

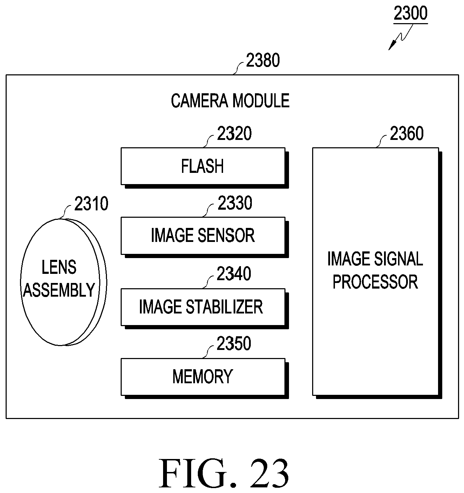

FIG. 23 is a block diagram 2300 illustrating the camera module 2380 according to an embodiment. Referring to FIG. 23, the camera module 2380 (e.g. the camera module 2280 of FIG. 22) may include a lens assembly 2310, a flash 2320, an image sensor 2330, an image stabilizer 2340, a memory 2350 (e.g., buffer memory), or an image signal processor 2360. The lens assembly 2310 may collect light emitted or reflected from an object whose image is to be taken. The lens assembly 2310 may include one or more lenses. According to an embodiment, the camera module 2380 may include a plurality of lens assemblies 2310. In such a case, the camera module 2380 may form, for example, a dual camera, a 360-degree camera, or a spherical camera. Some of the plurality of lens assemblies 2310 may have the same lens attribute (e.g., view angle, focal length, auto-focusing, f number, or optical zoom), or at least one lens assembly may have one or more lens attributes different from those of another lens assembly. The lens assembly 2310 may include, for example, a wide-angle lens or a telephoto lens.

The flash 2320 may emit light that is used to reinforce light reflected from an object. According to an embodiment, the flash 2320 may include one or more light emitting diodes (LEDs) (e.g., a red-green-blue (RGB) LED, a white LED, an infrared (IR) LED, or an ultraviolet (UV) LED) or a xenon lamp. The image sensor 2330 may obtain an image corresponding to an object by converting light emitted or reflected from the object and transmitted via the lens assembly 2310 into an electrical signal. According to an embodiment, the image sensor 2330 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 2330 may be implemented using, for example, a charged coupled device (CCD) sensor or a complementary metal oxide semiconductor (CMOS) sensor.

The image stabilizer 2340 may move the image sensor 2330 or at least one lens included in the lens assembly 2210 in a particular direction, or control an operational attribute (e.g., adjust the read-out timing) of the image sensor 2330 in response to the movement of the camera module 2380 or the electronic device 2201 including the camera module 2380. This allows compensating for at least part of a negative effect (e.g., image blurring) by the movement on an image being captured. According to an embodiment, the image stabilizer 2340 may sense such a movement by the camera module 2380 or the electronic device 2301 using a gyro sensor (not shown) or an acceleration sensor (not shown) disposed inside or outside the camera module 2380. According to an embodiment, the image stabilizer 2340 may be implemented, for example, as an optical image stabilizer. The memory 2350 may store, at least temporarily, at least part of an image obtained via the image sensor 2330 for a subsequent image processing task. For example, if image capturing is delayed due to shutter lag or multiple images are quickly captured, a raw image obtained (e.g., a Bayer-patterned image, a high-resolution image) may be stored in the memory 2350, and its corresponding copy image (e.g., a low-resolution image) may be previewed via the display device 2360. Thereafter, if a specified condition is met (e.g., by a user's input or system command), at least part of the raw image stored in the memory 2350 may be obtained and processed, for example, by the image signal processor 2260. According to an embodiment, the memory 2350 may be configured as at least part of the memory 2330 or as a separate memory that is operated independently from the memory 2330.

The image signal processor 2360 may perform one or more image processing with respect to an image obtained via the image sensor 2330 or an image stored in the memory 2350. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 2360 may perform control (e.g., exposure time control or read-out timing control) with respect to at least one (e.g., the image sensor 2330) of the components included in the camera module 2380. An image processed by the image signal processor 2360 may be stored back in the memory 2350 for further processing, or may be provided to an external component (e.g., the memory 2230, the display device 2260, the electronic device 2202, the electronic device 2204, or the server 2208) outside the camera module 2380. According to an embodiment, the image signal processor 2360 may be configured as at least part of the processor 2220, or as a separate processor that is operated independently from the processor 2220. If the image signal processor 2360 is configured as a separate processor from the processor 2320, at least one image processed by the image signal processor 2360 may be displayed, by the processor 2320, via the display device 2360 as it is or after being further processed.

According to an embodiment, the electronic device 2201 may include a plurality of camera modules 2380 having different attributes or functions. In such a case, at least one of the plurality of camera modules 2380 may form, for example, a wide-angle camera and at least another of the plurality of camera modules 2380 may form a telephoto camera. Similarly, at least one of the plurality of camera modules 2380 may form, for example, a front camera and at least another of the plurality of camera modules 2380 may form a rear camera.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2240) including one or more instructions that are stored in a storage medium (e.g., internal memory 2236 or external memory 2238) that is readable by a machine (e.g., the electronic device 2201). For example, a processor (e.g., the processor 2220) of the machine (e.g., the electronic device 2201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Various embodiments of the disclosure may provide an electronic device (e.g., the lens assembly 2200 in FIG. 22) including a lens assembly (e.g., the lens assembly 100, 200, 300, 400, 500, or 600 of FIGS. 1, 5, 9, 13, 17, and 21), in which a plurality of lenses are aligned along an optical axis O-I direction from an object obj side to an image side and include a first lens (e.g., the first lens L1 in FIGS. 1, 5, 9, 13, 17, and 21) having positive refractive power, a second lens (e.g., the second lens L2 in FIGS. 1, 5, 9, 13, 17, and 21), a third lens (e.g., the third lens L3 in FIGS. 1, 5, 9, 13, 17, and 21), a fourth lens (e.g., the fourth lens L4 in FIGS. 1, 5, 9, 13, 17, and 21) having negative refractive power and a concave shape on the image side, a fifth lens (e.g., the fifth lens L5 in FIGS. 1, 5, 9, 13, 17, and 21), and a sixth lens (e.g., the sixth lens L6 in FIGS. 1, 5, 9, 13, 17, and 21) having positive refractive power, and an image sensor (e.g., the image sensor IS in FIGS. 1, 5, 9, 13, 17, and 21) including an imaging plane img on which an image is formed. The air gap between the fourth lens and the fifth lens is larger than the air gap between other two adjacent lenses, and the electronic device satisfies Conditional Expression 1 and Conditional Expression 2 below.

[Conditional Expression 1]

$$TL/f < 1$$

[Conditional Expression 2]
$$0.1 < SL/TL < 0.8$$

(here, "TL" in Conditional Expression 1 is a distance from a object side surface of the first lens to the imaging plane, "f" is a composite focal length of the lenses included in the lens assembly, and "SL" in Conditional Expression 2 is a distance from an aperture to the imaging plane)

According to various embodiments, the electronic device may satisfy Conditional Expression 3 below.

[Conditional Expression 3]
$$0.1 < T34/T45 < 1$$

(here, "T34" in Conditional Expression 3 is an air gap between the third lens and the fourth lens, and "T45" is an air gap between the fourth lens and the fifth lens)

According to various embodiments, the electronic device may satisfy Conditional Expression 4 below.

[Conditional Expression 4]
$$0.1 < \frac{T12 + T23}{T34 + T45} < 1$$

(here, "T12" in Conditional Expression 4 is an air gap between the first lens and the second lens, "T23" is an air gap between the second lens and the third lens, "T34" is an air gap between the third lens and the fourth lens, and "T45" is an air gap between the fourth lens and the fifth lens)

According to various embodiments, the aperture may be disposed at an arbitrary position behind the second lens.

According to various embodiments, the aperture may be disposed between the third lens and the fourth lens.

According to various embodiments, the fifth lens may have negative refractive power.

According to various embodiments, the fifth lens may have a concave shape on the object side.

According to various embodiments, the third lens may have a concave shape on the image side.

According to various embodiments, the first lens and the second lens may have a convex shape on the object side.

According to various embodiments, the sixth lens may have a convex shape on the image side.

Various embodiments of the present disclosure may provide an electronic device (e.g., the lens assembly 2200 in FIG. 22) including a lens assembly (e.g., the lens assemblies 100, 200, 300, 400, 500, and 600 of FIGS. 1, 5, 9, 13, 17, and 21), in which a plurality of lenses are aligned along an optical axis direction from a object side to an image side and include a first lens (e.g., the first lens L1 in FIGS. 1, 5, 9, 13, 17, and 21) having positive refractive power, a second lens (e.g., the second lens L2 in FIGS. 1, 5, 9, 13, 17, and 21), a third lens (e.g., the third lens L3 in FIGS. 3, 5, 9, 13, 17, and 21) having a concave shape on an image side, a fourth lens (e.g., the fourth lens L4 in FIGS. 1, 5, 9, 13, 17, and 21) having negative refractive power and a concave shape on the image side, a fifth lens (e.g., the fifth lens L5 in FIGS. 1, 5, 9, 13, 17, and 21) having negative refractive power and a concave shape on a object side, and a sixth lens (e.g., the sixth lens L6 in FIGS. 1, 5, 9, 13, 17, and 21) having positive refractive power, and an image sensor (e.g., the image sensor IS in FIGS. 1, 5, 9, 13, 17, and 21) including an imaging plane on which an image is formed. The air gap between the fourth lens and the fifth lens is larger than the air gap between other two adjacent lenses, and the electronic device satisfies Conditional Expression 1 and Conditional Expression 3 below.

[Conditional Expression 1]

$$TL/f < 1$$

[Conditional Expression 2]

$$0.1 < SL/TL < 0.8$$

[Conditional Expression 3]

$$0.1 < T34/T45 < 1$$

(Here, "TL" in Conditional Expression 1 is a distance from the object side of the first lens to the imaging plane, "f" is a composite focal length of the lenses included in the lens assembly, "SL" in Conditional Expression 2 is a distance from the aperture to the imaging plane, "T34" in Conditional Expression 3 is an air gap between the third lens and the fourth lens, and "T45" is an air gap between the fourth lens and the fifth lens)

According to various embodiments, the electronic device may satisfy Conditional Expression 4 below.

[Conditional Expression 4]

$$0.1 < \frac{T12 + T23}{T34 + T45} < 1$$

(here, "T12" in Conditional Expression 4 is an air gap between the first lens and the second lens, "T23" is an air gap between the second lens and the third lens, "T34" is an air gap between the third lens and the fourth lens, and "T45" is an air gap between the fourth lens and the fifth lens)

According to various embodiments, the aperture may be disposed at an arbitrary position behind the second lens.

According to various embodiments, the aperture may be disposed between the third lens and the fourth lens.

According to various embodiments, the first lens and the second lens may have a convex shape on the object side.

According to various embodiments, the sixth lens may have a convex shape on the image side.

Various embodiments of the present disclosure may provide an electronic device (e.g., the lens assembly 2200 in FIG. 22) including a lens assembly (e.g., the lens assemblies 100, 200, 300, 400, 500, and 600 of FIGS. 1, 5, 9, 13, 17, and 21), in which a plurality of lenses are aligned along an optical axis O-I direction from an object obj side to an image side and include a first lens (e.g., the first lens L1 in FIGS. 1, 1, 9, 13, 17, and 21) having positive refractive power and a convex shape on a object side, a second lens (e.g., the second lens L2 in FIGS. 2, 5, 9, 13, 17, and 21) having a convex shape on the object side, a third lens (e.g., the third lens L3 in FIGS. 3, 5, 9, 13, 17, and 21) having a concave shape on an image side, a fourth lens (e.g., the fourth lens L4 in FIGS. 1, 5, 9, 13, 17, and 21) having negative refractive power and a concave shape on the image side, a fifth lens (e.g., the fifth lens L5 in FIGS. 1, 5, 9, 13, 17, and 21) having negative refractive power and a concave shape on the object side, and a sixth lens (e.g., the sixth lens L6 in FIGS. 1, 5, 9, 13, 17, and 21) having positive refractive power, and a convex shape on the image side, and an image sensor (e.g., the image sensor IS in FIGS. 1, 5, 9, 13, 17, and 21) including an imaging plane on which an image is formed. The air gap between the fourth lens and the fifth lens is larger than the air gap between other two adjacent lenses.

According to various embodiments, the electronic device may satisfy Conditional Expression 1 and Conditional Expression 2 below.

[Conditional Expression 1]

$$TL/f < 1$$

[Conditional Expression 2]

$$0.1 < SL/TL < 0.8$$

(here, "TL" in Conditional Expression 1 is a distance from a object side surface of the first lens to the imaging plane, "f" is a composite focal length of the lenses included in the lens assembly, and "SL" in Conditional Expression 2 is a distance from an aperture to the imaging plane)

According to various embodiments, the electronic device may satisfy Conditional Expression 3 below.

[Conditional Expression 3]

$$0.1 < T34/T45 < 1$$

(here, "T34" in Conditional Expression 3 is an air gap between the third lens and the fourth lens, and "T45" is an air gap between the fourth lens and the fifth lens)

According to various embodiments, the electronic device may satisfy Conditional Expression 4 below.

[Conditional Expression 4]

$$0.1 < \frac{T12 + T23}{T34 + T45} < 1$$

(here, "T12" in Conditional Expression 4 is an air gap between the first lens and the second lens, "T23" is an air gap between the second lens and the third lens, "T34" is an air gap between the third lens and the fourth lens, and "T45" is an air gap between the fourth lens and the fifth lens)

In the detailed description of various embodiments of the disclosure, specific embodiments have been described. However, it will be evident to a person ordinarily skilled in the art that various modification can be made without departing from the gist of the disclosure. For example, in a specific embodiment, the dimensions of a plurality of lenses or the like may be appropriately configured depending on the structure, required specifications, actual use environment, or the like of a lens assembly to be actually manufactured or an electronic device to be equipped with the lens assembly.

**Claims**

1. An electronic device including a lens assembly, the electronic device comprising:

the lens assembly in which a plurality of lenses are aligned along an optical axis direction from a object side to an image side, the lens assembly comprising

a first lens having positive refractive power,
a second lens,
a third lens,
a fourth lens having negative refractive power and a shape concave on the image side,
a fifth lens, and
a sixth lens having positive refractive power; and

an image sensor comprising an imaging plane on which an image is formed, and
wherein an air gap between the fourth lens and the fifth lens is larger than an air gap between other two adjacent lenses, and the electronic device satisfies Conditional Expression 1 and Conditional Expression 2 below.

[Conditional Expression 1]

$$TL/f < 1$$

[Conditional Expression 2]

$$0.1 < SL/TL < 0.8$$

(here, "TL" in Conditional Expression 1 is a distance from a object side surface of the first lens to the imaging plane, "f" is a composite focal length of the lenses included in the lens assembly, and "SL" in Conditional Expression 2 is a distance from an aperture to the imaging plane)

2. The electronic device of claim 1, wherein the electronic device satisfies Conditional Expression 3 below.

[Conditional Expression 3]

$$0.1 < T34/T45 < 1$$

(here, "T34" in Conditional Expression 3 is an air gap between the third lens and the fourth lens, and "T45" is an air gap between the fourth lens and the fifth lens)

3. The electronic device of claim 2, wherein the electronic device satisfies Conditional Expression 4 below.

[Conditional Expression 4]

$$0.1 < \frac{T12 + T23}{T34 + T45} < 1$$

(here, "T12" in Conditional Expression 4 is an air gap between the first lens and the second lens, "T23" is an air gap between the second lens and the third lens, "T34" is an air gap between the third lens and the fourth lens, and "T45" is an air gap between the fourth lens and the fifth lens)

4. The electronic device of claim 1, wherein the aperture is disposed at an arbitrary position behind the second lens.

5. The electronic device of claim 4, wherein the aperture is disposed between the third lens and the fourth lens.

6. The electronic device of claim 1, wherein the fifth lens has negative refractive power.

7. The electronic device of claim 1, wherein the fifth lens has a concave shape on the object side.

8. The electronic device of claim 1, wherein the third lens has a concave shape on the image side.

9. The electronic device of claim 1, wherein the first lens and the second lens have a convex shape on the object side.

10. The electronic device of claim 1, wherein the sixth lens has a convex shape on the image side.

11. The electronic device of claim 1, wherein the first lens has an Abbe number Vd of 55 or more.

FIG. 1

LONGITUDINAL
SPHERICAL ABER.

| | |
|---|---|
| —————— | 656.2700 NM |
| – – – – – | 587.5600 NM |
| —————— | 546.0900 NM |
| ················ | 486.1000 NM |
| —·—·— | 435.8300 NM |

FOCUS (MILLIMETERS)

FIG. 2

ASTIGMATIC
FIELD CURVES

DISTORTION

FIG. 3

FIG. 4

FIG. 5

LONGITUDINAL
SPHERICAL ABER.

| | |
|---|---|
| —————— | 656.2700 NM |
| — — — — | 587.5600 NM |
| —————— | 546.0900 NM |
| ·············· | 486.1000 NM |
| —·—·—·— | 435.8300 NM |

1.00

0.75

0.50

0.25

-0.100  -0.050  0.0  0.050  0.100
FOCUS (MILLIMETERS)

FIG. 6

ASTIGMATIC
FIELD CURVES

IMG HT
T S 2.25

1.69

1.13

0.56

-0.100 -0.050 0.0 0.050 0.100
FOCUS (MILLIMETERS)

FIG. 7

DISTORTION
IMG HT
2.25

1.69

1.13

0.56

-10.0 -5.0 0.0 5.0 10.0
% DISTORTION

FIG. 8

FIG. 9

LONGITUDINAL
SPHERICAL ABER.

| | |
|---|---|
| ——————— | 656.2700 NM |
| – – – – – | 587.5600 NM |
| ——————— | 546.0900 NM |
| ·············· | 486.1000 NM |
| —·—·—· | 435.8300 NM |

1.00

0.75

0.25

-0.100   -0.050   0.0   0.050   0.100

FOCUS (MILLIMETERS)

# FIG. 10

FIG. 11

FIG. 12

FIG. 13

LONGITUDINAL
SPHERICAL ABER.

656.3000 NM
587.6000 NM
546.1000 NM
486.1000 NM
435.8000 NM

1.00

0.75

0.25

-0.100  -0.050   0.0   0.050   0.100
FOCUS (MILLIMETERS)

FIG. 14

ASTIGMATIC
FIELD CURVES

DISTORTION

FIG. 15

FIG. 16

FIG. 17

LONGITUDINAL
SPHERICAL ABER.

| | 656.3000 NM |
| | 587.6000 NM |
| | 546.1000 NM |
| | 486.1000 NM |
| | 435.8000 NM |

1.00

0.75

0.50

0.25

-0.100  -0.050  0.0  0.050  0.100

FOCUS (MILLIMETERS)

FIG. 18

ASTIGMATIC
FIELD CURVES

S T IMG HT
2.40

1.80

1.20

0.60

-0.100 -0.050 0.0 0.050 0.100
FOCUS (MILLIMETERS)

FIG. 19

DISTORTION
IMG HT
2.40

1.80

1.20

0.60

-10.0 -5.0 0.0 5.0 10.0
% DISTORTION

FIG. 20

FIG. 21

FIG. 22

EP 4 495 656 A1

2300

2380

CAMERA MODULE

2320

FLASH

2310

LENS ASSEMBLY

2330

IMAGE SENSOR

2340

IMAGE STABILIZER

2350

MEMORY

2360

IMAGE SIGNAL PROCESSOR

# FIG. 23

<table>
<tr><td colspan="2" align="center">**INTERNATIONAL SEARCH REPORT**</td><td>International application No.<br>**PCT/KR2023/003666**</td></tr>
</table>

| | |
|---|---|
| **A.** | **CLASSIFICATION OF SUBJECT MATTER** |

**G02B 13/00**(2006.01)i; **G02B 9/62**(2006.01)i; **G03B 17/12**(2006.01)i; **H04N 23/55**(2023.01)i

According to International Patent Classification (IPC) or to both national classification and IPC

| | |
|---|---|
| **B.** | **FIELDS SEARCHED** |

Minimum documentation searched (classification system followed by classification symbols)

G02B 13/00(2006.01); G02B 1/04(2006.01); G02B 13/18(2006.01); G02B 9/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제6렌즈(6th lens), 망원 렌즈(telephoto lens), 굴절력(refractive power), 간격 (distance)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-1973455 B1 (SAMSUNG ELECTRO-MECHANICS CO., LTD.) 29 April 2019 (2019-04-29)<br>See paragraphs [0004] and [0049]-[0051], table 1 and figure 1. | 1-4,6,7,9-11 |
| X | KR 10-2017-0059244 A (KOLEN CO., LTD.) 30 May 2017 (2017-05-30)<br>See paragraphs [0001], [0044]-[0051] and [0079], tables 1 and 2 and figure 1. | 1,4-11 |
| X | KR 10-2021-0098911 A (SAMSUNG ELECTRO-MECHANICS CO., LTD.) 11 August 2021 (2021-08-11)<br>See paragraphs [0136] and [0145]-[0167], tables 3 and 7 and figures 1 and 4. | 1,4-8,10,11 |
| A | JP 2017-203933 A (OPTICAL LOGIC INC. et al.) 16 November 2017 (2017-11-16)<br>See claim 1 and figure 1. | 1-11 |
| A | JP 2016-206392 A (OPTICAL LOGIC INC. et al.) 08 December 2016 (2016-12-08)<br>See claim 1 and figure 1. | 1-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 June 2023** | **23 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center">INTERNATIONAL SEARCH REPORT<br>Information on patent family members</td><td colspan="2">International application No.<br><br>**PCT/KR2023/003666**</td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>KR    10-1973455  B1</td><td align="center">29 April 2019</td><td>CN     109696739   A</td><td align="center">30 April 2019</td></tr>
<tr><td></td><td></td><td>CN     109696739   B</td><td align="center">15 October 2021</td></tr>
<tr><td></td><td></td><td>CN     112835186   A</td><td align="center">25 May 2021</td></tr>
<tr><td></td><td></td><td>CN     113820826   A</td><td align="center">21 December 2021</td></tr>
<tr><td></td><td></td><td>CN     113820826   B</td><td align="center">18 November 2022</td></tr>
<tr><td></td><td></td><td>KR    10-1946262  B1</td><td align="center">11 February 2019</td></tr>
<tr><td></td><td></td><td>US     11474326   B2</td><td align="center">18 October 2022</td></tr>
<tr><td></td><td></td><td>US     11586009   B2</td><td align="center">21 February 2023</td></tr>
<tr><td></td><td></td><td>US    2019-0121061  A1</td><td align="center">25 April 2019</td></tr>
<tr><td></td><td></td><td>US    2020-0292787  A1</td><td align="center">17 September 2020</td></tr>
<tr><td></td><td></td><td>US    2023-0003972  A1</td><td align="center">05 January 2023</td></tr>
<tr><td>KR  10-2017-0059244  A</td><td align="center">30 May 2017</td><td>CN     106940468   A</td><td align="center">11 July 2017</td></tr>
<tr><td></td><td></td><td>KR    10-1811570  B1</td><td align="center">22 December 2017</td></tr>
<tr><td></td><td></td><td>US    2017-0146776  A1</td><td align="center">25 May 2017</td></tr>
<tr><td>KR  10-2021-0098911  A</td><td align="center">11 August 2021</td><td>KR  10-2019-0047650  A</td><td align="center">08 May 2019</td></tr>
<tr><td></td><td></td><td>KR  10-2022-0111228  A</td><td align="center">09 August 2022</td></tr>
<tr><td></td><td></td><td>KR    10-2430178  B1</td><td align="center">08 August 2022</td></tr>
<tr><td>JP    2017-203933   A</td><td align="center">16 November 2017</td><td>CN     107367821   A</td><td align="center">21 November 2017</td></tr>
<tr><td></td><td></td><td>CN     107367821   B</td><td align="center">11 December 2020</td></tr>
<tr><td></td><td></td><td>CN     206741072   U</td><td align="center">12 December 2017</td></tr>
<tr><td></td><td></td><td>JP      6452643   B2</td><td align="center">16 January 2019</td></tr>
<tr><td></td><td></td><td>US     10241302   B2</td><td align="center">26 March 2019</td></tr>
<tr><td></td><td></td><td>US     10788649   B2</td><td align="center">29 September 2020</td></tr>
<tr><td></td><td></td><td>US     10795133   B2</td><td align="center">06 October 2020</td></tr>
<tr><td></td><td></td><td>US     10996443   B2</td><td align="center">04 May 2021</td></tr>
<tr><td></td><td></td><td>US     11561373   B2</td><td align="center">24 January 2023</td></tr>
<tr><td></td><td></td><td>US    2017-0329109  A1</td><td align="center">16 November 2017</td></tr>
<tr><td></td><td></td><td>US    2019-0146192  A1</td><td align="center">16 May 2019</td></tr>
<tr><td></td><td></td><td>US    2019-0146193  A1</td><td align="center">16 May 2019</td></tr>
<tr><td></td><td></td><td>US    2019-0154994  A1</td><td align="center">23 May 2019</td></tr>
<tr><td></td><td></td><td>US    2020-0292792  A1</td><td align="center">17 September 2020</td></tr>
<tr><td></td><td></td><td>US    2020-0292793  A1</td><td align="center">17 September 2020</td></tr>
<tr><td>JP    2016-206392   A</td><td align="center">08 December 2016</td><td>CN     106066527   A</td><td align="center">02 November 2016</td></tr>
<tr><td></td><td></td><td>CN     106066527   B</td><td align="center">28 April 2020</td></tr>
<tr><td></td><td></td><td>CN     205067846   U</td><td align="center">02 March 2016</td></tr>
<tr><td></td><td></td><td>JP      6541180   B2</td><td align="center">10 July 2019</td></tr>
<tr><td></td><td></td><td>US    2016-0313536  A1</td><td align="center">27 October 2016</td></tr>
<tr><td></td><td></td><td>US      9804359   B2</td><td align="center">31 October 2017</td></tr>
</table>

Form PCT/ISA/210 (patent family annex) (July 2022)